# EUROPEAN PATENT APPLICATION

(11) **EP 4 778 639 A1**
(43) Date of publication of application: **22.07.2026**
(21) Application number: 25842101.5
(22) Date of filing: 22.04.2025
(51) Int. Cl.: B09B 5/00, B09B 3/45, B04C 9/00

(54) **INTEGRATED APPARATUS FOR ORGANIC SOLID WASTE TREATMENT, METAL RECOVERY AND CARBON MATERIAL PREPARATION, AND USE METHOD THEREFOR**

(30) Priority: 26.11.2024 CN 202411702659
(71) Applicant: Harbin Normal University, Harbin, Heilongjiang 150025 (CN)
(72) Inventor: WANG, Hanxi, Harbin, Heilongjiang 150025 (CN); ZHAO, Shuang, Harbin, Heilongjiang 150025 (CN)
(74) Representative: Dai, Simin
(86) International application number: PCT/CN2025/090312
(87) International publication number: WO 2026/113238

(57) **Abstract**

The present invention provides an integrated device for organic solid waste treatment, metal recovery and carbon material preparation and a use method thereof, belonging to the field of environmental science and engineering. The present invention solves the problems of low thermal energy utilization rate of organic solid waste, low recovery rate of metal-containing waste, and low carbon yield and low quality of carbon materials prepared from agricultural and forestry biomass waste. The integrated device includes a feeding system, a solid waste heat treatment system, a steam utilization system, an exhaust gas purification and recovery system, a biomass carbonization system, and a metal pyrolysis recovery system, where the solid waste heat treatment system includes a pyrolysis gasification chamber and a high-temperature pyrolysis chamber, the high-temperature pyrolysis chamber is divided into a left chamber and a right chamber, the steam utilization system includes a high-pressure steam room, a low-pressure steam room, and a hot water room; and the exhaust gas purification and recovery system includes a cyclone dust collector, a spray desulfurization and denitration chamber, a water bath purification chamber, an electrostatic precipitator, and a gas collector. It is mainly used for organic solid waste treatment, metal recovery, and carbon material preparation.

## Description

### TECHNICAL FIELD

The present invention belongs to the field of environmental science and engineering, and particularly relates to an integrated device for organic solid waste treatment, metal recovery and carbon material preparation and a use method thereof.

### BACKGROUND

Thermal energy conversion is an important utilization form of organic solid waste, pyrolysis recovery is an important form of metal purification, and carbon material preparation is an important utilization form of agricultural and forestry organic solid waste. Due to the complex composition of organic solid waste, especially industrial solid waste, different sources of raw materials lead to complex compositions, it is difficult for traditional methods to achieve full combustion, and the thermal energy conversion rate is low, resulting in the production of a large amount of complex gases, and high exhaust gas treatment cost. The traditional metal pyrolysis recovery produces a large amount of waste gases, which are difficult and costly to treat, especially causes metal oxidation, leading to a low utilization rate. However, the traditional method for preparing biochar and fuel charcoal from agricultural and forestry biomass waste is low in yield and energy utilization rate, the current thermal energy utilization rate of organic solid waste is low, the recovery rate of metal-containing waste is low, and the carbon yield and quality of carbon materials prepared from the agricultural and forestry biomass waste are low, which restrict the high-value utilization of organic solid wastes, the efficient recovery of metals, and the development of carbon materials. Therefore, it is of great significance to develop an integrated device that integrates high-temperature pyrolysis treatment of organic solid waste, metal recovery, and carbon material preparation to realize high-value utilization of heat energy of organic solid waste, high metal recovery rate and high yield of carbon materials.

At present, thermal energy conversion of organic solid waste, metal recovery and carbon material preparation are handled separately, resulting in production of a large amount of exhaust gas, high treatment costs, low thermal energy utilization rate and low equipment operation efficiency. In addition, there is currently a lack of pyrolysis treatment stage for gases generated from solid waste, especially for dioxins produced from plastics contained in organic solid waste. Due to insufficient high-temperature pyrolysis, a large amount of dioxin exhaust gas is produced. In addition, the cooling method currently used for the resynthesis of dioxins during the exhaust gas cooling process is high in resynthesis rate, resulting in high exhaust gas treatment costs. The existing organic solid waste is not fully pyrolyzed, so that the thermal energy utilization rate is low, but more exhaust gas with complex composition is emitted, resulting in low resource utilization efficiency. Due to the high plastic content in most metal wastes, the cost of exhaust gas treatment after pyrolysis recovery is high; and the biomass gas produced from carbon material preparation is difficult to collect, which poses safety risks for collection and storage. The existing metal recovery method leads to a high loss rate caused by metal oxidation due to the lack of a strict anaerobic environment, and the utilization of nitrogen and inert gases results in an increase in metal costs; and the environmental requirements for biochar preparation are stringent, while conventional heating methods are inefficient and costly.

### SUMMARY

In view of this, the present invention aims to provide an integrated device for organic solid waste treatment, metal recovery and carbon material preparation and a use method thereof, so as to solve the problems of low thermal energy utilization rate of organic solid waste, low recovery rate of metal-containing waste, low carbon yield and low quality of carbon materials prepared from agricultural and forestry biomass waste, high exhaust gas purification cost, and the like.

To achieve the above-mentioned purpose, the present invention adopts the following technical solutions: an integrated device for organic solid waste treatment, metal recovery and carbon material preparation includes a feeding system, a solid waste heat treatment system, a steam utilization system, an exhaust gas purification and recovery system, a biomass carbonization system, and a metal pyrolysis recovery system, where the solid waste heat treatment system includes a pyrolysis gasification chamber and a high-temperature pyrolysis chamber, and the high-temperature pyrolysis chamber is divided into a left chamber and a right chamber; the steam utilization system includes a high-pressure steam room, a low-pressure steam room, and a hot water room; the exhaust gas purification and recovery system includes a cyclone dust collector, a spray desulfurization and denitration chamber, a water bath purification chamber, an electrostatic precipitator, and a gas collector; the feeding system is connected to a feed inlet of the pyrolysis gasification chamber, the pyrolysis gasification chamber is in communication with the left chamber of the high-temperature pyrolysis chamber through a primary vent port, the left chamber of the high-temperature pyrolysis chamber is in communication with the right chamber thereof through a secondary vent port, the right chamber of the high-temperature pyrolysis chamber is connected to the high-pressure steam room through a first vent duct, the high-pressure steam room is connected to the low-pressure steam room, the low-pressure steam room is connected to the hot water room through a second vent duct, the upper end of the hot water room is connected to the low-pressure steam room through a hot water return pipe, a water return valve is arranged on the hot water return pipe, the hot water room is connected to the cyclone dust collector through a first smoke exhaust pipe, an exhaust pipe of the cyclone dust collector is connected to the spray desulfurization and denitration chamber through a connecting pipe, the connecting pipe is provided with an induced draft fan, the spray desulfurization and denitration chamber is connected to the water bath purification chamber through a second smoke exhaust pipe, the water bath purification chamber is connected to the electrostatic precipitator through a third smoke exhaust pipe, the electrostatic precipitator is connected to the gas collector through an exhaust gas collection pipe, the gas collector is connected to a discharge pipe, an exhaust gas return pipe and an exhaust gas cooling utilization pipe are connected to the discharge pipe, the tail end of the discharge pipe is an exhaust gas emission outlet, an exhaust gas discharge control valve is arranged on the discharge pipe, the exhaust gas return pipe is connected to the left and right chambers of the high-temperature pyrolysis chamber and a recirculation fan, the recirculation fan is connected to a gas inlet of the pyrolysis gasification chamber through an air inlet pipe, the exhaust gas cooling utilization pipe is connected to the biomass carbonization system, an exhaust gas cooling utilization control valve is arranged on the exhaust gas cooling utilization pipe, both the biomass carbonization system and the metal pyrolysis recovery system are provided with hot air inlets, two hot air pipes are connected to two sides of the first vent duct, the two hot air pipes are respectively connected to the hot air inlets formed in the biomass carbonization system and the metal pyrolysis recovery system, hot air inlet control valves are respectively arranged on the two hot air pipes, the biomass carbonization system is internally provided with biomass gas discharge outlets, the metal pyrolysis recovery system is internally provided with combustion gas outlets, the biomass gas discharge outlets and the combustion gas outlets are respectively connected to the pyrolysis gasification chamber through biomass gas return pipes, and the biomass gas return pipes are provided with biomass gas control valves.

Still further, the biomass carbonization system includes a carbonization chamber, a first feeding system and a char discharging machine, a first charging inlet and a plurality of hot air inlets are formed in the side wall of the carbonization chamber, the first charging inlet is provided opposite to the plurality of hot air inlets, the first charging inlet is connected to the first feeding system, a plurality of biomass gas discharge outlets are formed in the top of the carbonization chamber, a cooling gas inlet is formed in the bottom of the carbonization chamber, the exhaust gas cooling utilization pipe is connected to the cooling gas inlet, a carbonization plate is arranged inside the carbonization chamber, rollers are arranged at both ends of the carbonization plate, the rollers are connected to a driver, the front end of the carbonization plate is close to the first charging inlet and the tail end thereof is close to a collection pit, a push-pull plate is arranged above the collection pit, the collection pit is connected to the char discharging machine, a heat collecting plate is arranged above the carbonization plate, and an opening is formed in the upper end of the heat collecting plate.

Still further, the spacing between the plurality of hot air inlets is 0.5-1.0 m, the hot air inlets are inclined at an angle of 5-10 degrees in the direction of the first charging inlet, the heat collecting plate has an arched structure, the distance from the opening to the first charging inlet is 0.2-0.4 times the inner space length of the carbonization chamber, three biomass gas discharge outlets are available, one of which is located above the opening of the heat collecting plate, and the other two are located at both ends of the top of the carbonization chamber.

Still further, the first feeding system includes a charging table, a charging tipper, a feeding platform, a feeding belt, a feeding hopper, a material-propelling system, and spools, where the spools are arranged at two sides of the feeding belt, one end of the feeding belt is arranged inside the feeding hopper, and the other end thereof is arranged on the feeding platform; the charging tipper is arranged at one end of the feeding platform, the charging tipper is located above the charging table, and the charging tipper is in an eccentric rotary type for feeding; and the material-propelling system is arranged inside the feeding platform, an output end of the material-propelling system is arranged on the charging table, and the charging table is connected to the first charging inlet.

Still further, the metal pyrolysis recovery system includes a metal recycling pyrolysis chamber, a residue discharge machine and a second feeding system, where a second charging inlet and a plurality of hot air inlets are formed in the side wall of the metal recycling pyrolysis chamber, the second charging inlet is provided opposite to the plurality of hot air inlets, the second charging inlet is connected to the second feeding system, a plurality of combustion gas outlets are formed in the top of the metal recycling pyrolysis chamber, a bidirectional fire grate is arranged inside the metal recycling pyrolysis chamber, the bidirectional fire grate is connected to the driver, the front end of the bidirectional fire grate is close to the second charging inlet and the tail end thereof is close to a receiving chute, the push-pull plate is arranged above the receiving chute, water is injected into the receiving chute in an amount of 0.55-0.85 times the capacity of the receiving chute, and the receiving chute is connected to the residue discharge machine.

Still further, the spacing between the plurality of hot air inlets is 0.3-0.5 m, the hot air inlets are inclined at an angle of 3-8 degrees in the direction of the second charging inlet, two combustion gas outlets are available, and the two combustion gas outlets are located at two ends of the top of the metal recycling pyrolysis chamber.

Still further, the second feeding system includes a spiral charging hopper, a feeding plate, a charging chute and a charging spiral rod, where one end of the feeding plate is arranged inside the charging chute, and the other end thereof is arranged on the spiral charging hopper; the charging spiral rod is arranged inside the spiral charging hopper; and the charging spiral rod is connected to the second charging inlet.

Still further, the pyrolysis gasification chamber is internally provided with a unidirectional fire grate, the front end of the unidirectional fire grate is close to the feeding system, and the tail end thereof is close to a discharge port; a discharge bin is arranged under the discharge port, a front baffle and a rear baffle are arranged above the unidirectional fire grate, and the front baffle and the rear baffle are both of arc-shaped structures; and the gas inlet is formed between the front baffle and the rear baffle.

Still further, two exhaust outlets are formed above the left chamber of the high-temperature pyrolysis chamber, and the two exhaust outlets of the left chamber are located in the middle and on the right side of the left chamber; an exhaust outlet is formed above the right chamber of the high-temperature pyrolysis chamber, and the exhaust outlet of the right chamber is located on the right side of the right chamber; the left chamber and right chamber of the high-temperature pyrolysis chamber exhaust hot air through the exhaust outlets; and all the exhaust outlets are connected to the exhaust gas return pipe through exhaust connecting pipes, and both the exhaust connecting pipes and the exhaust gas return pipe are provided with gas return valves.

Still further, the flow rate of the hot air discharged from the left chamber of the high-temperature pyrolysis chamber is 1.5-2.2 times that of the hot air discharged from the right chamber thereof, and the air volume recirculated by the gas collector through the exhaust gas return pipe is 0.15-0.25 times that of the hot air discharged from the high-temperature pyrolysis chamber.

Still further, a combustion promoter inlet is formed in the top of the left chamber of the high-temperature pyrolysis chamber, and additive addition ports are provided in the first vent duct as well as the top and side walls of the right chamber of the high-temperature pyrolysis chamber.

Still further, a combustion promoter is added to the combustion promoter inlet, and the combustion promoter is a gas with an oxygen content exceeding 95% or a solid fuel with a calorific value of 5000-9000 kcal/kg.

Still further, an additive is added to the additive addition ports, and the additive is a mixture of modified biochar, diatomaceous earth, ceramic powder, quartz sand, manganese sand, celadonite powder, caliche, volcanic rock, activated carbon, and river sand, at a mixing ratio of 1:(0.03-0.08):(0.15-0.35):(0.10-0.25):(0.03-0.05):(0.06-0.09):(0.03-0.08):(0.05-0.12):(0.35-0.55):(0.08-0.12).

Still further, the modified biochar is a mixture of iron oxide modified biochar and potassium permanganate modified biochar, at a mixing ratio of 1:(0.2-0.5) , both having a particle size of 0.5-2 mm; the particle sizes of the diatomaceous earth, ceramic powder, quartz sand, manganese sand, celadonite powder, caliche, volcanic rock, activated carbon, and river sand are 0.1-1.0 mm, 0.01-0.1 mm, 0.25-2.0 mm, 0.25-1.0 mm, 0.1-1.0 mm, 0.25-5.0 mm, 0.5-2.0 mm, 0.1-2.0 mm, and 0.1-1.0 mm, respectively; and the activated carbon is coal-based activated carbon.

Still further, dust exhaust ports are provided at the bottoms of the left chamber and right chamber of the high-temperature pyrolysis chamber, the high-pressure steam room, the low-pressure steam room, and the hot water room; the dust exhaust port at the bottom of the left chamber of the high-temperature pyrolysis chamber is connected to a dust storage pit through a dust pipeline, a dust removal fan is arranged on the dust pipeline, a dust cover is arranged at the end portion of the dust pipeline, and the dust cover is connected through a spring; and a dust storage tank is arranged under the dust exhaust port at the bottom of the right chamber of the high-temperature pyrolysis chamber.

Still further, an air exhaust vent is provided at the lower part of the left chamber of the high-temperature pyrolysis chamber, an air intake vent is provided at the lower part of the right chamber of the high-temperature pyrolysis chamber, the air exhaust vent and the air intake vent are connected with each other via a flow regulating duct, and a flow regulating fan is arranged on the flow regulating duct.

Still further, the feeding system includes a feeding chamber, a gas separator, a material-propelling blower, a charging box, a first conveyor belt and a charging platform, where one end of the first conveyor belt is arranged inside the charging box, and the other end thereof is arranged on the feeding chamber; a second conveyor belt is arranged inside the feeding chamber, and the tail end of the second conveyor belt is close to the charging platform; and the gas separator is connected to the material-propelling blower, an outlet of the material-propelling blower is provided on the charging platform, and the charging platform is connected to the feed inlet of the pyrolysis gasification chamber.

Still further, the nitrogen is separated from the air by the gas separator using membrane separation technology, and other gases in the air enter the pyrolysis gasification chamber through the material-propelling blower.

Still further, the air volume entering the pyrolysis gasification chamber through the air inlet pipe is 0.15-0.35 times the air volume of the material-propelling blower.

Still further, positioning plates are arranged above both the feed inlet of the pyrolysis gasification chamber and the second conveyor belt in the feeding chamber, and a baffle plate is arranged above the feed inlet of the pyrolysis gasification chamber.

Still further, the cyclone dust collector includes a cyclone dust removal chamber and an ash collection chamber; the exhaust pipe is arranged inside the cyclone dust removal chamber, and the exhaust pipe has a structure with a larger upper part and a smaller lower part; and a dust settling hole is formed in the bottom of the cyclone dust removal chamber, the dust settling hole is located inside the ash collection chamber, and a dust settling plate is arranged above the dust settling hole.

Still further, the spray desulfurization and denitration chamber includes a spray chamber, a desulfurization room and a denitrification room, where the spray chamber is connected to the connecting pipe, a water tank is arranged inside the spray chamber, and a plurality of spray nozzles are connected to the lower part of the water tank; a waste liquid collection port is provided at the bottom of the spray chamber, a wastewater collection bucket is arranged under the waste liquid collection port, the spray chamber is in communication with the desulfurization room through a desulfurization inlet, and the desulfurization room is in communication with the denitrification room through a denitrification inlet; and the denitrification room is connected to the water bath purification chamber through a second smoke exhaust pipe.

Still further, an activated carbon material is employed in the desulfurization room, and a mixture of activated carbon and iron oxide is employed in the denitrification room.

Still further, an exhaust gas monitoring box is arranged on the exhaust gas collection pipe, and multiple gas monitoring probes are arranged inside the exhaust gas monitoring box.

Still further, each of the biomass carbonization system, the metal pyrolysis recovery system, the high-pressure steam room, and the left chamber and right chamber of the high-temperature pyrolysis chamber is provided with 2-6 pressure monitoring gauges and 2-6 temperature monitoring gauges; each of the pyrolysis gasification chamber, the low-pressure steam room and the hot water room is provided with 2-6 temperature monitoring gauges; and the third smoke exhaust pipe is provided with 1-2 temperature monitoring gauges.

Still further, the gas collector collects CO₂ by combining an upward exhaust method and an activated carbon pressure swing adsorption method, and the remaining exhaust gas enters the discharge pipe.

Still further, each of the pyrolysis gasification chamber and the high-temperature pyrolysis chamber is provided with a steel plate on the outer side, and is provided with refractory cotton, refractory bricks, refractory cement and refractory coating in sequence from outside to inside.

Still further, the rated steam pressure of the high-pressure steam room is 2.0-3.0 MPa, and the steam pressure of the low-pressure steam room is 1.0-2.0 MPa.

The present invention further provides a use method of the integrated device for organic solid waste treatment, metal recovery and carbon material preparation, and the specific process is as follows:
organic solid waste enters the pyrolysis gasification chamber through the feeding system; the pyrolysis gas produced enters the left chamber of the high-temperature pyrolysis chamber through the primary vent port, then enters the right chamber of the high-temperature pyrolysis chamber through the secondary vent port, and enters the high-pressure steam room, the low-pressure steam room and the hot water room in turn after completing the circulation in the solid waste heat treatment system; the thermal energy conversion of the organic solid waste is accomplished through the solid waste heat treatment system and the steam utilization system;
the solid waste heat treatment system runs simultaneously with the biomass carbonization system and/or the metal pyrolysis recovery system; the hot air in the high-temperature pyrolysis chamber enters the biomass carbonization system and/or the metal pyrolysis recovery system through the hot air pipes; agricultural and forestry biomass waste is placed in the biomass carbonization system and carbonized through the biomass carbonization system to prepare biochar or fuel charcoal; metal waste is put into the metal pyrolysis recovery system and the metal waste is separated by the metal pyrolysis recovery system to achieve metal recovery; the combustible gas generated by the biomass carbonization system enters the pyrolysis gasification chamber through the biomass gas discharge outlets and the biomass gas return pipes; the combustible gas generated by the metal pyrolysis recovery system enters the pyrolysis gasification chamber through the combustion gas outlets and the biomass gas return pipes;
the exhaust gas discharged from the hot water room enters the cyclone dust collector, and then enters the spray desulfurization and denitration chamber under the action of the induced draft fan; after dust removal, desulfurization, and denitration treatment, the exhaust gas enters the water bath purification chamber, the electrostatic precipitator, and the gas collector in sequence;
and CO₂ is collected from the gas collector, part of the remaining exhaust gas enters the pyrolysis gasification chamber through the exhaust gas return pipe, and the rest exhaust gas enters the biomass carbonization system through the exhaust gas cooling utilization pipe that has completed the carbonization operation or is discharged outside through the discharge pipe.

Still further, the organic solid waste has a water content of 25% or less and a calorific value higher than 2000 kcal/kg, the metal waste has a water content less than 10%, and the agricultural and forestry biomass waste has a water content less than 20%; the wastes are first prepared into particles and then dried; when the wastes are prepared into biochar, the particle size is 10-30 mm; and when the wastes are prepared into fuel charcoal, the particle size is 20-50 mm, or the columnar diameter and length are 20-80 mm and 100-300 mm, respectively.

Compared with the prior art, the present invention has the beneficial effects that: the present invention provides an integrated device for organic solid waste treatment, metal recovery and carbon material preparation and a use method thereof, which can achieve the integrated treatment of organic solid waste utilization, metal recovery, and carbon material preparation, solve the problems that the thermal energy utilization rate of organic solid waste is low, a large amount of pollutants are produced from metal waste and a high loss rate is caused by metal oxidation, the biochar yield is low and the output of waste gas is large, the CO₂ in exhaust gas is low in concentration and difficult to recycle, and the like, achieving a thermal energy conversion rate of organic solid waste reaching up to 85% or more, a metal content after purification exceeding 80%, a carbon yield of biochar exceeding 30%, and a calorific value of fuel charcoal reaching up to 4200-5400 kcal/kg. The device realizes a reduction of 30% or more in the cost of recycling CO₂ from exhaust gas and an increase of 40% or more in operational efficiency, reduces the exhaust emissions by 30% or more, and lowers the exhaust gas treatment costs by 80% or more. The device realizes continuous operation, high production efficiency, large output, and high degree of industrialization. The device is low in energy consumption and does not consume other energy in addition to a small amount of electricity, so that the cost is reduced.

The present invention integrates organic solid waste, metal recovery and carbon material preparation, realizes the efficient utilization of exhaust gas from metal recovery and carbon material preparation, and reduces the exhaust gas treatment costs. By utilizing the exhaust gas after high-temperature pyrolysis, the cost of metal waste treatment is reduced. Through anaerobic hot air treatment, the efficiency and carbon yield are increased.

According to the present invention, the full combustion of the system is realized through efficient heat preservation, combustion promoter addition and a special structural system, so that multi-stage pyrolysis is completed, dioxins are fully decomposed, and dioxin re-synthesis is reduced; and moreover, dioxin re-synthesis is further reduced through special additives, so that dioxins are effectively removed, and the exhaust gas purification cost is low. The concentration of CO₂ in the exhaust gas collected in the present invention is high, reaching up to 50% or more, which is twice that of conventional organic solid waste of about 25%, so that the efficient recycling of CO₂ is facilitated. The present invention not only improves the thermal energy utilization efficiency of organic solid waste, increases the metal recovery rate and improves the yield and quality of carbon materials, but also greatly reduces the output of waste gases, which has important practical significance for promoting the development of organic solid waste treatment, metal recovery and carbon material industries.

The present invention realizes the full combustion of organic solid waste through high-temperature multi-stage pyrolysis to improve the thermal energy utilization efficiency and reduce the generation of exhaust gas, thus lowering the exhaust gas treatment costs; it improves the recovery rate of metal waste through full carbonization, and improves the carbon yield of biochar through full carbonization; and it can achieve the integration of efficient thermal energy utilization of organic solid waste, efficient recovery of metals, and efficient preparation of biochar, with simple process, low energy consumption, little impact on the environment, and high promotion and application value.

### BRIEF DESCRIPTION OF THE DRAWINGS

The accompanying drawings constituting a part of the present invention are used to provide a further understanding of the present invention. The exemplary embodiments of the present invention and their descriptions are used to explain the present invention and do not constitute an improper limitation to the present invention. In the figures:
FIG. 1 is a schematic elevation cross-sectional view of an integrated device for organic solid waste treatment, metal recovery and carbon material preparation according to the present invention;
FIG. 2 is a schematic top view of the integrated device for organic solid waste treatment, metal recovery and carbon material preparation according to the present invention;
FIG. 3 is a schematic cross-sectional view of a biomass carbonization system according to the present invention; and
FIG. 4 is a schematic cross-sectional view of a metal pyrolysis recovery system according to the present invention.

In the figures: 1 denotes a feeding chamber, 2 denotes a pyrolysis gasification chamber, 3 denotes a high-temperature pyrolysis chamber, 4 denotes a high-pressure steam room, 5 denotes a low-pressure steam room, 6 denotes a hot water room, 7 denotes a cyclone dust collector, 8 denotes a spray desulfurization and denitration chamber, 9 denotes a water bath purification chamber, 10 denotes an electrostatic precipitator, 11 denotes an exhaust gas monitoring box, 12 denotes a gas collector, 13 denotes a gas separator, 14 denotes a material-propelling blower, 15 denotes a charging box, 16 denotes a first conveyor belt, 17 denotes a charging platform, 18 denotes a baffle plate, 19 denotes positioning plates, 20 denotes a unidirectional fire grate, 21 denotes a discharge port, 22 denotes a front baffle, 23 denotes a rear baffle, 24 denotes a discharge bin, 25 denotes a gas inlet, 26 denotes an air inlet pipe, 27 denotes a primary vent port, 28 denotes a recirculation fan, 29 denotes a secondary vent port, 30 denotes a combustion promoter inlet, 31 denotes an exhaust outlet, 32 denotes a dust exhaust port, 33 denotes a dust removal fan, 34 denotes a dust cover, 35 denotes a dust storage pit, 36 denotes a dust storage tank, 37 denotes a flow regulating fan, 38 denotes an air intake vent, 39 denotes an additive addition port, 40 denotes a first vent duct, 41 denotes a third smoke exhaust pipe, 42 denotes a cyclone dust removal chamber, 43 denotes an ash collection chamber, 44 denotes an exhaust pipe, 45 denotes a dust settling plate, 46 denotes a dust settling hole, 47 denotes an induced draft fan, 48 denotes a connecting pipe, 49 denotes a spray chamber, 50 denotes spray nozzles, 51 denotes a wastewater collection bucket, 52 denotes a waste liquid collection port, 53 denotes a desulfurization inlet, 54 denotes a desulfurization room, 55 denotes a denitrification inlet, 56 denotes a denitrification room, 57 denotes an exhaust gas collection pipe, 58 denotes gas return valves, 59 denotes an exhaust gas return pipe, 60 denotes an exhaust gas emission outlet, 61 denotes an exhaust gas discharge control valve, 62 denotes a hot water return pipe, 63 denotes an exhaust gas cooling utilization pipe, 64 denotes an exhaust gas cooling utilization control valve, 65 denotes a carbonization chamber, 66 denotes a first feeding system, 67 denotes a char discharging machine, 68 denotes hot air pipes, 69 denotes pressure monitoring gauges, 70 denotes a temperature monitoring gauge, 71 denotes biomass gas return pipes, 72 denotes biomass gas discharge outlets, 73 denotes a hot air inlet, 74 denotes a heat collecting plate, 75 denotes a collection pit, 76 denotes a carbonization plate, 77 denotes a charging table, 78 denotes a charging tipper, 79 denotes a feeding platform, 80 denotes a feeding belt, 81 denotes a feeding hopper, 82 denotes a material-propelling system, 83 denotes spools, 84 denotes a roller, 85 denotes a push-pull plate, 86 denotes a driver, 87 denotes a cooling gas inlet, 88 denotes a hot air inlet control valve, 89 denotes a biomass gas control valve, 90 denotes a metal recycling pyrolysis chamber, 91 denotes a spiral charging hopper, 92 denotes a feeding plate, 93 denotes a residue discharge machine, 94 denotes a combustion gas outlet, 95 denotes a bidirectional fire grate, 96 denotes a receiving chute, 97 denotes a charging chute, 98 denotes a charging spiral rod, 99 denotes a second vent duct, 100 denotes a water return valve, 101 denotes a first smoke exhaust pipe, 102 denotes a second smoke exhaust pipe, 103 denotes a discharge pipe, 104 denotes a first charging inlet, 105 denotes a second feeding system, 106 denotes a second charging inlet, 107 denotes a dust pipeline, 108 denotes an air exhaust vent, 109 denotes a flow regulating duct, and 110 denotes a second conveyor belt.

### DETAILED DESCRIPTION

The technical solutions in embodiments of the present invention will be described clearly and completely hereinafter with reference to the accompanying drawings in the embodiments of the present invention. It should be noted that in the absence of conflicts, the embodiments and features in the embodiments may be combined mutually, and the described embodiments are only a part rather than all of the embodiments of the present invention.

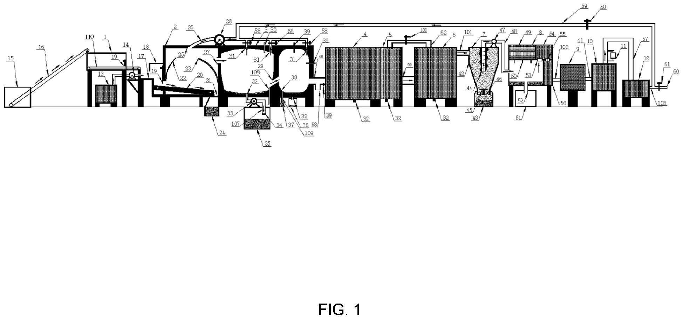

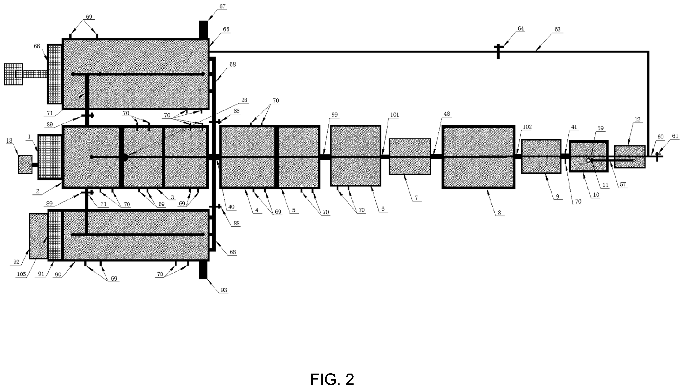

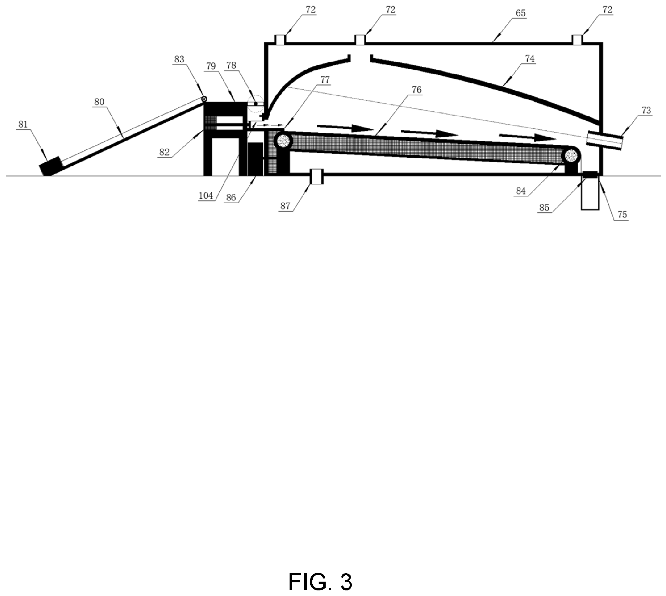

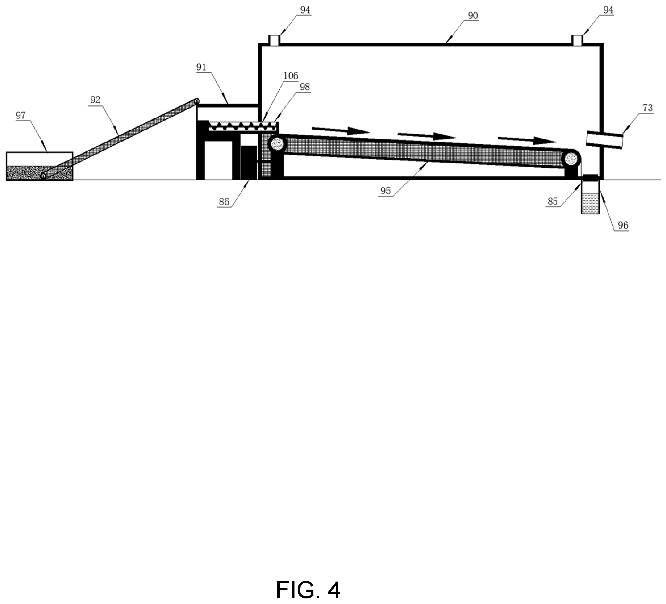

**Embodiment 1:** Referring to FIG. 1 to FIG. 4 to illustrate this embodiment, an integrated device for organic solid waste treatment, metal recovery and carbon material preparation includes a feeding system, a solid waste heat treatment system, a steam utilization system, an exhaust gas purification and recovery system, a biomass carbonization system, and a metal pyrolysis recovery system, where the solid waste heat treatment system includes a pyrolysis gasification chamber 2 and a high-temperature pyrolysis chamber 3, and the high-temperature pyrolysis chamber 3 is divided into a left chamber and a right chamber; the steam utilization system includes a high-pressure steam room 4, a low-pressure steam room 5, and a hot water room 6; the exhaust gas purification and recovery system includes a cyclone dust collector 7, a spray desulfurization and denitration chamber 8, a water bath purification chamber 9, an electrostatic precipitator 10, and a gas collector 12; the feeding system is connected to a feed inlet of the pyrolysis gasification chamber 2, the pyrolysis gasification chamber 2 is in communication with the left chamber of the high-temperature pyrolysis chamber 3 through a primary vent port 27, the left chamber of the high-temperature pyrolysis chamber 3 is in communication with the right chamber thereof through a secondary vent port 29, the right chamber of the high-temperature pyrolysis chamber 3 is connected to the high-pressure steam room 4 through a first vent duct 40, the high-pressure steam room 4 is connected to the low-pressure steam room 5, the low-pressure steam room 5 is connected to the hot water room 6 through a second vent duct 99, the upper end of the hot water room 6 is connected to the low-pressure steam room 5 through a hot water return pipe 62, a water return valve 100 is arranged on the hot water return pipe 62, the hot water room 6 is connected to the cyclone dust collector 7 through a first smoke exhaust pipe 101, an exhaust pipe 44 of the cyclone dust collector 7 is connected to the spray desulfurization and denitration chamber 8 through a connecting pipe 48, the connecting pipe 48 is provided with an induced draft fan 47, the spray desulfurization and denitration chamber 8 is connected to the water bath purification chamber 9 through a second smoke exhaust pipe 102, the water bath purification chamber 9 is connected to the electrostatic precipitator 10 through a third smoke exhaust pipe 41, the electrostatic precipitator 10 is connected to the gas collector 12 through an exhaust gas collection pipe 57, the gas collector 12 is connected to a discharge pipe 103, an exhaust gas return pipe 59 and an exhaust gas cooling utilization pipe 63 are connected to the discharge pipe 103, the tail end of the discharge pipe 103 is an exhaust gas emission outlet 60, an exhaust gas discharge control valve 61 is arranged on the discharge pipe 103, the exhaust gas return pipe 59 is connected to the left and right chambers of the high-temperature pyrolysis chamber 3 and a recirculation fan 28, the recirculation fan 28 is connected to a gas inlet 25 of the pyrolysis gasification chamber 2 through an air inlet pipe 26, the exhaust gas cooling utilization pipe 63 is connected to the biomass carbonization system, an exhaust gas cooling utilization control valve 64 is arranged on the exhaust gas cooling utilization pipe 63, both the biomass carbonization system and the metal pyrolysis recovery system are provided with hot air inlets 73, two hot air pipes 68 are connected to two sides of the first vent duct 40, the two hot air pipes 68 are respectively connected to the hot air inlets 73 formed in the biomass carbonization system and the metal pyrolysis recovery system, hot air inlet control valves 88 are respectively arranged on the two hot air pipes 68, the biomass carbonization system is internally provided with biomass gas discharge outlets 72, the metal pyrolysis recovery system is internally provided with combustion gas outlets 94, the biomass gas discharge outlets 72 and the combustion gas outlets 94 are respectively connected to the pyrolysis gasification chamber 2 through biomass gas return pipes 71, and the biomass gas return pipes 71 are provided with biomass gas control valves 89.

The specific process of a use method of this embodiment is as follows:
organic solid waste enters the pyrolysis gasification chamber 2 through the feeding system. The pyrolysis gas produced enters the left chamber of the high-temperature pyrolysis chamber 3 through the primary vent port 27, then enters the right chamber of the high-temperature pyrolysis chamber 3 through the secondary vent port 29, and enters the high-pressure steam room 4, the low-pressure steam room 5 and the hot water room 6 in turn after completing the circulation in the solid waste heat treatment system. The thermal energy conversion of the organic solid waste is accomplished through the solid waste heat treatment system and the steam utilization system. The solid waste heat treatment system runs simultaneously with the biomass carbonization system and/or the metal pyrolysis recovery system. The hot air in the high-temperature pyrolysis chamber 3 enters the biomass carbonization system and/or the metal pyrolysis recovery system through the hot air pipes 68. Agricultural and forestry biomass waste is placed in the biomass carbonization system and carbonized through the biomass carbonization system to prepare biochar or fuel charcoal. Metal waste is put into the metal pyrolysis recovery system and metal waste is separated by the metal pyrolysis recovery system to achieve metal recovery. The combustible gas generated by the biomass carbonization system enters the pyrolysis gasification chamber 2 through the biomass gas discharge outlets 72 and the biomass gas return pipes 71. The combustible gas generated by the metal pyrolysis recovery system enters the pyrolysis gasification chamber 2 through the combustion gas outlets 94 and the biomass gas return pipes 71.
The exhaust gas discharged from the hot water room 6 enters the cyclone dust collector 7, and then enters the spray desulfurization and denitration chamber 8 under the action of the induced draft fan 47. After dust removal, desulfurization, and denitration treatment, the exhaust gas enters the water bath purification chamber 9, the electrostatic precipitator 10, and the gas collector 12 in sequence. The CO₂ is collected from the gas collector 12, part of the remaining exhaust gas enters the pyrolysis gasification chamber 2 through the exhaust gas return pipe 59, and the rest exhaust gas enters the biomass carbonization system through the exhaust gas cooling utilization pipe 63 that has completed the carbonization operation or is discharged outside through the discharge pipe 103.

This embodiment is specifically described as follows:
The organic solid waste has a water content of 25% or less and a calorific value higher than 2000 kcal/kg, the metal waste has a water content of less than 10%, and the agricultural and forestry biomass waste has a water content less than 20%. The wastes are first prepared into particles and then dried. When the wastes are prepared into biochar, the particle size is 10-30 mm. When the wastes are prepared into fuel charcoal, the particle size is 20-50 mm, or the columnar diameter and length are 20-80 mm and 100-300 mm, respectively.

The pyrolysis gasification chamber 2 is internally provided with a unidirectional fire grate 20, the front end of the unidirectional fire grate 20 is close to the feeding system, and the tail end thereof is close to a discharge port 21. A discharge bin 24 is arranged under the discharge port 21, a front baffle 22 and a rear baffle 23 are arranged above the unidirectional fire grate 20, and the front baffle 22 and the rear baffle 23 are both of arc-shaped structures. The gas inlet 25 is formed between the front baffle 22 and the rear baffle 23.

Two exhaust outlets 31 are formed above the left chamber of the high-temperature pyrolysis chamber 3, and the two exhaust outlets 31 of the left chamber are located in the middle and on the right side of the left chamber. An exhaust outlet 31 is formed above the right chamber of the high-temperature pyrolysis chamber 3, and the exhaust outlet 31 of the right chamber is located on the right side of the right chamber. The left chamber and right chamber of the high-temperature pyrolysis chamber 3 exhaust hot air through the exhaust outlets 31. All the exhaust outlets 31 are connected to the exhaust gas return pipe 59 through exhaust connecting pipes, both the exhaust connecting pipes and the exhaust gas return pipe 59 are provided with gas return valves 58, and the amount of reflux gas in the gas collector 12 and the left and right chambers of the high-temperature pyrolysis chamber 3 is controlled by the gas return valves 58. The flow rate of the hot air discharged from the left chamber of the high-temperature pyrolysis chamber 3 is 1.5-2.2 times that of the hot air discharged from the right chamber thereof, and the air volume recirculated by the gas collector 12 through the exhaust gas return pipe 59 is 0.15-0.25 times that of the hot air discharged from the high-temperature pyrolysis chamber 3.

A combustion promoter inlet 30 is formed in the top of the left chamber of the high-temperature pyrolysis chamber 3, and additive addition ports 39 are provided in the first vent duct 40 as well as the top and side walls of the right chamber of the high-temperature pyrolysis chamber 3. A combustion promoter is added to the combustion promoter inlet 30, and the combustion promoter is a gas with an oxygen content exceeding 95% or a solid fuel with a calorific value of 5000-9000 kcal/kg. An additive is added to the additive addition ports 39, and the additive is a mixture of modified biochar, diatomaceous earth, ceramic powder, quartz sand, manganese sand, celadonite powder, caliche, volcanic rock, activated carbon, and river sand, at a mixing ratio of 1:(0.03-0.08):(0.15-0.35):(0.10-0.25):(0.03-0.05):(0.06-0.09):(0.03-0.08):(0.05-0.12):(0.35-0.55):(0.08-0.12). The modified biochar is a mixture of iron oxide modified biochar and potassium permanganate modified biochar, at a mixing ratio of 1:(0.2-0.5), both having a particle size of 0.5-2 mm. The particle sizes of the diatomaceous earth, ceramic powder, quartz sand, manganese sand, celadonite powder, caliche, volcanic rock, activated carbon, and river sand are 0.1-1.0 mm, 0.01-0.1 mm, 0.25-2.0 mm, 0.25-1.0 mm, 0.1-1.0 mm, 0.25-5.0 mm, 0.5-2.0 mm, 0.1-2.0 mm, and 0.1-1.0 mm, respectively. The activated carbon is coal-based activated carbon.

Dust exhaust ports 32 are provided at the bottoms of the left chamber and right chamber of the high-temperature pyrolysis chamber 3, the high-pressure steam room 4, the low-pressure steam room 5, and the hot water room 6. The dust exhaust port 32 at the bottom of the left chamber of the high-temperature pyrolysis chamber 3 is connected to a dust storage pit 35 through a dust pipeline 107, a dust removal fan 33 is arranged on the dust pipeline 107, a dust cover 34 is arranged at the end portion of the dust pipeline 107, and the dust cover 34 is connected through a spring. A dust storage tank 36 is arranged under the dust exhaust port 32 at the bottom of the right chamber of the high-temperature pyrolysis chamber 3.

An air exhaust vent 108 is provided at the lower part of the left chamber of the high-temperature pyrolysis chamber 3, an air intake vent 38 is provided at the lower part of the right chamber of the high-temperature pyrolysis chamber 3, the air exhaust vent 108 and the air intake vent 38 are connected with each other via a flow regulating duct 109, a flow regulating fan 37 is arranged on the flow regulating duct 109, and the flow regulating fan 37 draws and discharges the hot air from the left chamber of the high-temperature pyrolysis chamber 3 to the right chamber thereof.

The feeding system includes a feeding chamber 1, a gas separator 13, a material-propelling blower 14, a charging box 15, a first conveyor belt 16 and a charging platform 17, where one end of the first conveyor belt 16 is arranged inside the charging box 15, and the other end thereof is arranged on the feeding chamber 1. A second conveyor belt 110 is arranged inside the feeding chamber 1, and the tail end of the second conveyor belt 110 is close to the charging platform 17. The gas separator 13 is connected to the material-propelling blower 14, an outlet of the material-propelling blower 14 is provided on the charging platform 17, and the charging platform 17 is connected to the feed inlet of the pyrolysis gasification chamber 2.

The nitrogen is separated from the air by the gas separator 13 using a membrane separation technology, and other gases after separation are mainly oxygen-containing and enter the pyrolysis gasification chamber 2 through the material-propelling blower 14. The air volume entering the pyrolysis gasification chamber 2 through the air inlet pipe 26 is 0.15-0.35 times the air volume of the material-propelling blower 14. Positioning plates 19 are arranged above both the feed inlet of the pyrolysis gasification chamber 2 and the second conveyor belt 110 in the feeding chamber 1, and a baffle plate 18 is arranged above the feed inlet of the pyrolysis gasification chamber 2.

The gas separator 13 separates the nitrogen from the air, and the charging box 15 of the feeding system conveys the organic solid waste to the feeding chamber 1 via the first conveyor belt 16, and then transports the organic solid waste to the charging platform 17 via the second conveyor belt 110 inside the feeding chamber 1. The organic waste is blown onto the unidirectional fire grate 20 of the pyrolysis gasification chamber 2 through the material-propelling blower 14. The organic waste in the pyrolysis gasification chamber 2 is pyrolyzed at 300-500 °C, and the combustible gas produced enters the high-temperature pyrolysis chamber 3 through the primary vent port 27 and is subjected to high-temperature pyrolysis for 3-5 seconds at 850-1000 °C. During the high-temperature pyrolysis process, a combustion promoter is added to the left chamber of the high-temperature pyrolysis chamber 3 through the combustion promoter inlet 30, and a biomass additive is added to the right chamber thereof through the additive addition ports 39. The biomass additive is added to the first vent duct 40 between the high-temperature pyrolysis chamber 3 and the high-pressure steam room 4 through the additive addition ports 39.

The bottom of the left chamber of the high-temperature pyrolysis chamber 3 is cleaned of dust every 2-6 hours by the dust removal fan 33, and the dust cover 34 is connected through the spring and is only opened during dust removal to discharge the dust into the dust storage pit 35. The bottom of the right chamber is cleaned of dust every 12-18 hours through the dust exhaust port 32, and the dust is discharged into the dust storage tank 36. The high-pressure steam room 4, the low-pressure steam room 5, and the hot water room 6 are cleaned of dust every 2-4 days.

The biomass carbonization system includes a carbonization chamber 65, a first feeding system 66 and a char discharging machine 67, a first charging inlet 104 and a plurality of hot air inlets 73 are formed in the side wall of the carbonization chamber 65, the first charging inlet 104 is provided opposite to the plurality of hot air inlets 73, the first charging inlet 104 is connected to the first feeding system 66, the plurality of biomass gas discharge outlets 72 are formed in the top of the carbonization chamber 65, a cooling gas inlet 87 is formed in the bottom of the carbonization chamber 65, the exhaust gas cooling utilization pipe 63 is connected to the cooling gas inlet 87, a carbonization plate 76 is arranged inside the carbonization chamber 65, rollers 84 are arranged at both ends of the carbonization plate 76, the rollers 84 are connected to a driver 86, the front end of the carbonization plate 76 is close to the first charging inlet 104 and the tail end thereof is close to a collection pit 75, a push-pull plate 85 is arranged above the collection pit 75, the collection pit 75 is connected to the char discharging machine 67, a heat collecting plate 74 is arranged above the carbonization plate 76, and an opening is formed in the upper end of the heat collecting plate 74.

The spacing between the plurality of hot air inlets 73 is 0.5-1.0 m, the hot air inlets 73 are inclined at an angle of 5-10 degrees in the direction of the first charging inlet 104, the heat collecting plate 74 has an arched structure, the distance from the opening to the first charging inlet 104 is 0.2-0.4 times the inner space length of the carbonization chamber 65, three biomass gas discharge outlets 72 are available, one of which is located above the opening of the heat collecting plate 74, and the other two are located at both ends of the top of the carbonization chamber 65.

The first feeding system 66 includes a charging table 77, a charging tipper 78, a feeding platform 79, a feeding belt 80, a feeding hopper 81, a material-propelling system 82, and spools 83, where the spools 83 are arranged at the two sides of the feeding belt 80, one end of the feeding belt 80 is arranged inside the feeding hopper 81, and the other end thereof is arranged on the feeding platform 79. The charging tipper 78 is arranged at one end of the feeding platform 79, the charging tipper 78 is located above the charging table 77, and the charging tipper 78 is in an eccentric rotary type for feeding. The material-propelling system 82 is arranged inside the feeding platform 79, an output end of the material-propelling system 82 is arranged on the charging table 77, and the charging table 77 is connected to the first charging inlet 104.

The feeding hopper 81 conveys the treated material to the charging tipper 78 through the feeding platform 79 under the action of a motor through the spools 83 on the top. The charging tipper 78 is in the eccentric rotary type for feeding. After falling onto the charging table 77 below, the material is conveyed to the carbonization plate 76 via the material-propelling system 82, the driver 86 is activated, the upper side of the carbonization plate 76 is covered with agricultural and forestry biomass waste under the drive of the front and rear rollers 84, and the driver 86 is deactivated at the same time.

The hot air inlet control valves 88 are opened to allow hot air to enter the carbonization chamber 65. After an interval of 3-8 min, the biomass gas control valves 89 are opened, and the combustible gas enters the pyrolysis gasification chamber 2 through the biomass gas return pipes 71. After carbonization is completed and the exhaust gas is introduced for cooling, the driver 86 is activated to pull the push-pull plate 85, and thus the carbonized biochar material is discharged into the collection pit 75.

The metal pyrolysis recovery system includes a metal recycling pyrolysis chamber 90, a residue discharge machine 93 and a second feeding system 105. A second charging inlet 106 and a plurality of hot air inlets 73 are formed in the side wall of the metal recycling pyrolysis chamber 90, the second charging inlet 106 is provided opposite to the plurality of hot air inlets 73, the second charging inlet 106 is connected to the second feeding system 105, a plurality of combustion gas outlets 94 are formed in the top of the metal recycling pyrolysis chamber 90, a bidirectional fire grate 95 is arranged inside the metal recycling pyrolysis chamber 90, the bidirectional fire grate 95 is connected to the driver 86, the front end of the bidirectional fire grate 95 is close to the second charging inlet 106 and the tail end thereof is close to a receiving chute 96, the push-pull plate 85 is arranged above the receiving chute 96, water is injected into the receiving chute 96 in an amount of 0.55-0.85 times the capacity of the receiving chute, and the receiving chute 96 is connected to the residue discharge machine 93.

The spacing between the plurality of hot air inlets 73 is 0.3-0.5 m, the hot air inlets 73 are inclined at an angle of 3-8 degrees in the direction of the second charging inlet 106, two combustion gas outlets 94 are available and the two combustion gas outlets 94 are located at two ends of the top of the metal recycling pyrolysis chamber 90.

The second feeding system 105 includes a spiral charging hopper 91, a feeding plate 92, a charging chute 97 and a charging spiral rod 98. One end of the feeding plate 92 is arranged inside the charging chute 97, and the other end thereof is arranged on the spiral charging hopper 91. The charging spiral rod 98 is arranged inside the spiral charging hopper 91. The charging spiral rod 98 is connected to the second charging inlet 106.

The metal-containing waste in the charging chute 97 is transported to the spiral charging hopper 91 via the feeding plate 92. Under the action of the charging spiral rod 98, the treated metal-containing waste is conveyed to the bidirectional fire grate 95. The driver 86 is activated, the upper side of the fire grate is covered with the metal-containing waste, and the driver 86 is deactivated at the same time. The hot air inlet control valves 88 are opened to allow hot air to enter the metal recycling pyrolysis chamber 90 for carbonization of the metal-containing waste, the biomass gas control valves 89 are opened at the same time, and the combustible gas enters the pyrolysis gasification chamber 2 through the biomass gas return pipes 71. After carbonization is completed, the hot air inlet control valves 88 are closed, the driver 86 is activated to pull the push-pull plate 85, and thus the carbonized metal-containing waste is discharged into the receiving chute 96.

The hot air in the high-temperature pyrolysis chamber 3 enters the carbonization chamber 65 and/or the metal recycling pyrolysis chamber 90 through the hot air pipes 68 and the hot air inlets 73. The combustible gas generated by the carbonization chamber 65 enters the pyrolysis gasification chamber 2 through the biomass gas discharge outlets 72 and the biomass gas return pipes 71. The combustible gas generated by the metal recycling pyrolysis chamber 90 enters the pyrolysis gasification chamber 2 through combustion gas outlets 94 and the biomass gas return pipes 71.

The thermal energy conversion of the organic solid waste is accomplished through the pyrolysis gasification chamber 2, the high-temperature pyrolysis chamber 3, the high-pressure steam room 4, the low-pressure steam room 5, and the hot water room 6, the carbonization process of agricultural and forestry biomass is accomplished through the carbonization chamber 65, and metal waste separation is accomplished through the metal recycling pyrolysis chamber 90. The solid waste heat treatment system may run simultaneously with the biomass carbonization system and the metal pyrolysis recovery system, and the solid waste heat treatment system may also run simultaneously with the biomass carbonization system or the metal pyrolysis recovery system alone.

Organic solid waste enters the pyrolysis gasification chamber 2 through the feeding system, and the pyrolysis gas produced enters the high-temperature pyrolysis chamber 3 through the primary vent port 27. After completing the internal circulation within the system through the secondary vent port 29, the gas sequentially enters the high-pressure steam room 4, the low-pressure steam room 5, the hot water room 6, and the cyclone dust collector 7. The hot water room 6 regularly replenishes the hot water loss in the low-pressure steam room 5 through the hot water return pipe 62.

The cyclone dust collector 7 includes a cyclone dust removal chamber 42 and an ash collection chamber 43. The exhaust pipe 44 is arranged inside the cyclone dust removal chamber 42, and the exhaust pipe 44 has a structure with a larger upper part and a smaller lower part. A dust settling hole 46 is formed in the bottom of the cyclone dust removal chamber 42, the dust settling hole 46 is located inside the ash collection chamber 43, a dust settling plate 45 is arranged above the dust settling hole 46, and dust falls into the ash collection chamber 43 through the dust settling hole 46.

The spray desulfurization and denitration chamber 8 includes a spray chamber 49, a desulfurization room 54 and a denitrification room 56. The spray chamber 49 is connected to the connecting pipe 48, a water tank is arranged inside the spray chamber 49, and a plurality of spray nozzles 50 are connected to the lower part of the water tank. A waste liquid collection port 52 is provided at the bottom of the spray chamber 49, a wastewater collection bucket 51 is arranged under the waste liquid collection port 52, the spray chamber 49 is in communication with the desulfurization room 54 through a desulfurization inlet 53, and the desulfurization room 54 is in communication with the denitrification room 56 through a denitrification inlet 55. The denitrification room 56 is connected to the water bath purification chamber 9 through a second smoke exhaust pipe 102. An activated carbon material is employed in the desulfurization room 54, and a mixture of activated carbon and iron oxide is employed in the denitrification room 56. Tap water is injected into the water tank, and the wastewater entering the wastewater collection bucket 51 through the waste liquid collection port 52 is evaporated and then reused in the spray chamber 49.

Under the action of the induced draft fan 47, the exhaust gas enters the spray desulfurization and denitration chamber 8 through the exhaust pipe 44 of the cyclone dust collector 7 and the connecting pipe 48. After dust reduction is achieved by the spraying of the spray nozzles 50, the exhaust gas enters the desulfurization room 54 through the desulfurization inlet 53, and then enters the denitrification room 56 through the denitrification inlet 55. The gas after desulfurization and denitrification passes through the water bath purification chamber 9 and the electrostatic precipitator 10 in sequence, and then enters the gas collector 12 through the exhaust gas collection pipe 57 to collect CO₂. Part of the remaining exhaust gas enters the pyrolysis gasification chamber 2 through the exhaust gas return pipe 59, and the rest exhaust gas enters the carbonization chamber 65 through the exhaust gas cooling utilization pipe 63 that has completed the carbonization operation or is discharged outside through the exhaust gas emission outlet 60.

After the carbonization of the agricultural and forestry biomass waste in the carbonization chamber 65 is completed, the carbonization chamber 65 is opened for connection with the exhaust gas cooling utilization control valve 64 of the exhaust gas cooling utilization pipe 63, and the exhaust gas discharge control valve 61 and the gas return valves 58 are closed at the same time. After the temperature inside the carbonization chamber 65 drops below 200 °C, the exhaust gas cooling utilization control valve 64 is closed, and the exhaust gas discharge control valve 61 and the gas return valves 58 are opened at the same time to complete the cooling of the carbonization chamber 65. After the carbonization chamber 65 is cooled, the push-pull plate 85 is opened and the driver 86 is activated. The rollers 84 drive the carbonization plate 76 to transport the carbonized agricultural and forestry biomass charcoal material into the collection pit 75, and then the char discharging machine 67 is activated to complete residue removal.

An exhaust gas monitoring box 11 is arranged on the exhaust gas collection pipe 57, a plurality of different gas monitoring probes is arranged inside the exhaust gas monitoring box 11, and data is collected once every 20-120 min. Each of the biomass carbonization system, the metal pyrolysis recovery system, the high-pressure steam room 4, and the left chamber and right chamber of the high-temperature pyrolysis chamber 3 is provided with 2-6 pressure monitoring gauges 69 and 2-6 temperature monitoring gauges 70. Each of the pyrolysis gasification chamber 2, the low-pressure steam room 5 and the hot water room 6 are provided with 2-6 temperature monitoring gauges 70. The third smoke exhaust pipe 41 is provided with 1-2 temperature monitoring gauges 70.

The gas collector 12 collects CO₂ by combining an upward exhaust method and an activated carbon pressure swing adsorption method. The upward exhaust method is first used to obtain CO₂ gas with a concentration higher than 50%, and then the activated carbon pressure swing adsorption method is used to obtain CO₂ gas with a concentration higher than 80%. The remaining exhaust gas enters the discharge pipe 103.

Each of the pyrolysis gasification chamber 2 and the high-temperature pyrolysis chamber 3 is provided with a steel plate on the outer side, and is provided with four high-temperature resistant insulation layers, i.e., refractory cotton, refractory bricks, refractory cement and refractory coating in sequence from outside to inside. The rated steam pressure of the high-pressure steam room 4 is 2.0-3.0 MPa, and the steam pressure of the low-pressure steam room 5 is 1.0-2.0 MPa. This equipment realizes the energy utilization of textile waste, traditional Chinese medicine residue, and urban sludge particles, implements the preparation of straw biochar and the preparation of branch fuel charcoal, and achieves the recycling of metal zippers and aluminum metal. This equipment achieves an operating load of 0.5-5.0 t/h, and realizes near-zero emissions of pollutants, so that it has significant advantages compared with similar equipment. The exhaust gas monitoring pollutant emission indicators are shown in Table 1. NOx, HCl, and total volatile organic compounds (VOCs) are all below the detection limit, with monitoring indicators showing zero, and other indicators are below the national standard limits.

**Table 1 List of exhaust emission indicators**

| Pollutant item | Dioxin (ng TEQ/m³) | NOx (mg/m³) | SO₂ (mg/m³) | HCl (mg/m³) | CO (mg/m³) |
|---|---|---|---|---|---|
| Concentration of this item | 0.008±0.003 | 0.000 | 0.643±0.179 | 0.000 | 5.136±0.692 |
| Standard limit of China | 0.1 | 250 | 80 | 50 | 80 |
| Pollutant item | Particulate matter (mg/m³) | Mercury and its compounds (mg/m³) | Cadmium, thallium and their compounds (mg/m³) | Total VOCs (mg/m³) | Antimony, arsenic, lead, chromium, cobalt, copper, manganese, nickel and their compounds (mg/m³) |
| Concentration of this item | 2.563±0.692 | (1.96±0.53) × 10⁻⁴ | (7.78±1.56) × 10⁻³ | 0.000 | 0.053±0.012 |
| Standard limit of China | 20 | 0.05 | 0.1 | 60 | 1.0 |

| | | | | | |
|---|---|---|---|---|---|
| Note: The standard limits of China for total VOCs are limited by other industry indicators specified in the *Emission Control Standard for Industrial Enterprises Volatile Organic Compounds* (DB 12/524-2020), and other indicators are based on the limits specified in the *Standard for Pollution Control on the Municipal Solid Waste Incineration* (GB 18485-2014). | | | | | |

**Embodiment 2:** Taking textile waste steam utilization and metal zipper recycling as an example.

As shown in FIG. 1, FIG. 2 and FIG. 4, a device includes a feeding system, a solid waste heat treatment system, a steam utilization system, an exhaust gas purification and recovery system, and a metal pyrolysis recovery system. The solid waste heat treatment system includes a pyrolysis gasification chamber 2 and a high-temperature pyrolysis chamber 3. The steam utilization system includes a high-pressure steam room 4, a low-pressure steam room 5, and a hot water room 6. The exhaust gas purification and recovery system includes a cyclone dust collector 7, a spray desulfurization and denitration chamber 8, a water bath purification chamber 9, an electrostatic precipitator 10, an exhaust gas monitoring box 11, and a gas collector 12. The metal pyrolysis recovery system includes a metal recycling pyrolysis chamber 90, a spiral charging hopper 91, a feeding plate 92, a charging chute 97, a charging spiral rod 98, and a residue discharge machine 93. The feeding system includes a feeding chamber 1, a gas separator 13, a material-propelling blower 14, a charging box 15, a first conveyor belt 16, a charging platform 17, a baffle plate 18, and positioning plates 19. The pyrolysis gasification chamber 2 is provided with a unidirectional fire grate 20, a discharge port 21, a front baffle 22, a rear baffle 23, a discharge bin 24, and a gas inlet 25. The pyrolysis gasification chamber 2 is in communication with the high-temperature pyrolysis chamber 3 through a primary vent port 27. The high-temperature pyrolysis chamber 3 is divided into two spaces, i.e., a left chamber and a right chamber. The left chamber is provided with a combustion promoter inlet 30, exhaust outlets 31, and a dust exhaust port 32, and the right chamber is provided with a dust exhaust port 32, an air intake vent 38, and an additive addition port 39. The left chamber is in communication with the right chamber through a secondary vent port 29. The high-temperature pyrolysis chamber 3 is connected to the high-pressure steam room 4 through a first vent duct 40, the low-pressure steam room 5 is connected to the hot water room 6 through a second vent duct 99, the hot water room 6 is connected to the cyclone dust collector 7 through a third smoke exhaust pipe 41, the cyclone dust collector 7 is connected to the spray desulfurization and denitration chamber 8 through a connecting pipe 48, the spray desulfurization and denitration chamber 8 is connected to the water bath purification chamber 9 through a smoke exhaust pipe, the water bath purification chamber 9 is connected to the electrostatic precipitator 10 through a second smoke exhaust pipe 102, and the electrostatic precipitator 10 is connected to the gas collector 12 through an exhaust gas collection pipe 57. The exhaust gas monitoring box 11 is arranged on the exhaust gas collection pipe 57, the gas collector 12 is connected to the high-temperature pyrolysis chamber 3 and a recirculation fan 28 through an exhaust gas return pipe 59, and the recirculation fan 28 is connected to a gas inlet 25 of the pyrolysis gasification chamber 2 through an air inlet pipe 26. The metal recycling pyrolysis chamber 90 includes hot air inlets 73, a push-pull plate 85, a driver 86, combustion gas outlets 94, a bidirectional fire grate 95, and a receiving chute 96. The hot air in the high-temperature pyrolysis chamber 3 enters the metal recycling pyrolysis chamber 90 through hot air pipes 68 and the hot air inlet 73. The combustible gas produced in the metal recycling pyrolysis chamber 90 enters the pyrolysis gasification chamber 2 through the combustion gas outlets 94 and biomass gas return pipes 71. The solid waste heat treatment system serves for the treatment of textile waste, while the metal pyrolysis recovery system serves for the treatment of metal-containing waste such as zippers from clothes.

Textile waste enters the pyrolysis gasification chamber 2 through the feeding system, and the pyrolysis gas produced enters the high-temperature pyrolysis chamber 3 through the primary vent port 27. After completing the internal circulation within the system through the secondary vent port 29, the gas sequentially enters the high-pressure steam room 4, the low-pressure steam room 5, the hot water room 6, and the cyclone dust collector 7. The hot water room 6 regularly replenishes hot water for the low-pressure steam room 5 through a hot water return pipe 62. Under the action of an induced draft fan 47, the exhaust gas enters the spray desulfurization and denitration chamber 8 through an exhaust pipe 44 of the cyclone dust collector 7 and the connecting pipe 48. After dust reduction is achieved by the spraying of spray nozzles 50, the exhaust gas enters a desulfurization room 54 through a desulfurization inlet 53, and then enters a denitrification room 56 through a denitrification inlet 55. The gas after desulfurization and denitrification passes through the water bath purification chamber 9 and the electrostatic precipitator 10 in sequence, and then enters the gas collector 12 through the exhaust gas collection pipe 57 to collect CO₂. Part of the remaining exhaust gas enters the pyrolysis gasification chamber 2 through the exhaust gas return pipe 59, the rest gas is discharged outside through an exhaust gas emission outlet 60, and the exhaust gas emission outlet 60 is configured as a tee pipe.

The gas separator 13 separates the nitrogen from the air, and the charging box 15 of the feeding system conveys the textile waste to the feeding chamber 1 via the first conveyor belt 16, and then transports the textile waste to the charging platform 17 via the second conveyor belt 110 inside the feeding chamber 1. The textile waste is blown onto the unidirectional fire grate 20 of the pyrolysis gasification chamber 2 through the material-propelling blower 14. The textile waste in the pyrolysis gasification chamber 2 is pyrolyzed at 300-500 °C, and the combustible gas produced enters the high-temperature pyrolysis chamber 3 through the primary vent port 27 and is subjected to high-temperature pyrolysis for 3 seconds at 850-900 °C. During the high-temperature pyrolysis process, a combustion promoter is added to the left chamber through the combustion promoter inlet 30, and a biomass additive is added to the right chamber through additive addition ports 39. The biomass additive is added to the first vent duct 40 between the high-temperature pyrolysis chamber 3 and the high-pressure steam room 4 through the additive addition ports 39.

The bottom of the left chamber of the high-temperature pyrolysis chamber 3 is cleaned of dust every 2 h by a dust removal fan 33, and a dust cover 34 is connected through a spring and is only opened during dust removal to discharge the dust into a dust storage pit 35. The bottom of the right chamber is cleaned of dust every 12 h through the dust exhaust port 32, and the dust is discharged into a dust storage tank 36. The high-pressure steam room 4, the low-pressure steam room 5, and the hot water room 6 are cleaned of dust every 2 days. The cyclone dust collector 7 includes a cyclone dust removal chamber 42 and an ash collection chamber 43, the exhaust pipe 44 in the cyclone dust removal chamber 42 is larger at the upper part and smaller at the lower part, dust falls into the ash collection chamber 43 through a dust settling hole 46, and a dust settling plate 45 is arranged above the dust settling hole 46. An activated carbon material is employed in the desulfurization room 54, and a mixture of activated carbon and iron oxide is employed in the denitrification room 56. Different gas monitoring probes are arranged inside the exhaust gas monitoring box 11, data is collected once every 20 min, and the gas collector 12 is used for collecting CO₂.

Each of the pyrolysis gasification chamber 2 and the high-temperature pyrolysis chamber 3 is provided with a steel plate on the outer side, and is provided with four high-temperature resistant insulation layers, i.e., refractory cotton, refractory bricks, refractory cement and refractory coating in sequence from outside to inside. A combustion promoter added to the combustion promoter inlet 30 is a gas with an oxygen content exceeding 95%, with an additional amount of 0.2-35 m³/h. An additive added to the additive addition ports 39 is a mixture of modified biochar, diatomaceous earth, ceramic powder, quartz sand, manganese sand, celadonite powder, caliche, volcanic rock, activated carbon, and river sand, at a mixing ratio of 1:0.03:0.15:0.10:0.03:0.06:0.03:0.05:0.35:0.08. The modified biochar is a mixture of iron oxide modified biochar and potassium permanganate modified biochar, at a mixing ratio of 1:0.2, both having a particle size of 0.5-2 mm. The particle sizes of the diatomaceous earth, ceramic powder, quartz sand, manganese sand, celadonite powder, caliche, volcanic rock, activated carbon, and river sand are 0.1-1.0 mm, 0.01-0.1 mm, 0.25-2.0 mm, 0.25-1.0 mm, 0.1-1.0 mm, 0.25-5.0 mm, 0.5-2.0 mm, 0.1-2.0 mm, and 0.1-1.0 mm, respectively. The activated carbon is coal-based activated carbon.

The spacing between the hot air inlets 73 of the metal recycling pyrolysis chamber 90 is 0.3 m, and the hot air inlets are inclined at an angle of 3 degrees in the feeding direction of the metal recycling pyrolysis chamber 90. Two combustion gas outlets 94 are available and are located at two ends of the top of the metal recycling pyrolysis chamber 90. The metal-containing waste in the charging chute 97 is transported to the spiral charging hopper 91 via the feeding plate 92. Under the action of the charging spiral rod 98, the treated metal-containing waste is conveyed to the bidirectional fire grate 95. The driver 86 is activated, the upper side of the fire grate is covered with the metal-containing waste, and the driver 86 is deactivated at the same time. The hot air inlet control valves 88 are opened to allow hot air to enter the metal recycling pyrolysis chamber 90 for separation of the metal-containing waste, the biomass gas control valves 89 are opened at the same time, and the combustible gas enters the pyrolysis gasification chamber 2 through the biomass gas return pipes 71. After separation is completed, the hot air inlet control valves 88 are closed, the driver 86 is activated to pull the push-pull plate 85, and thus the separated metal-containing waste is discharged into the receiving chute 96. Water is injected into the receiving chute 96 in an amount of 0.55 times the capacity of the receiving chute.

The metal recycling pyrolysis chamber 90 is provided with two pressure monitoring gauges 69 and two temperature monitoring gauges 70, the pyrolysis gasification chamber 2 is provided with two temperature monitoring gauges 70, each of the left chamber and right chamber of the high-temperature pyrolysis chamber 3 is provided with two pressure monitoring gauges 69 and two temperature monitoring gauges 70, the high-pressure steam room 4 is provided with two pressure monitoring gauges 69 and two temperature monitoring gauges 70, the hot water room 6 is provided with two temperature monitoring gauges 70, and the third smoke exhaust pipe 41 between the water bath purification chamber 9 and the electrostatic precipitator 10 is provided with one temperature monitoring gauge 70.

The secondary air volume entering the pyrolysis gasification chamber 2 through the air inlet pipe 26 is 0.15 times the air volume of the material-propelling blower 14. The amount of reflux gas in the gas collector 12 and the left and right chambers of the high-temperature pyrolysis chamber 3 is controlled by the gas return valves 58. The hot water in the hot water room 6 is replenished to the high-pressure steam room 4 and the low-pressure steam room 5 through the hot water return pipe 62 to compensate for the hot water loss.

The textile waste has a water content of 15-20%, with a calorific value of 4000-4500 kcal/kg, while the water content of the metal waste is less than 10%; a flow regulating fan 37 has a flow rate of 50 m³/h, which draws and discharges the hot air from the left chamber of the high-temperature pyrolysis chamber 3 to the right chamber thereof; tap water is injected into a spray chamber 49, and the wastewater entering a wastewater collection bucket 51 through a waste liquid collection port 52 is evaporated and then reused in the spray chamber 49. An exhaust outlet 31 in the right chamber of the high-temperature pyrolysis chamber 3 is located on the right side, and the exhaust outlets 31 in the left chamber thereof are located in the middle and on the right side. The flow rate of the hot air discharged from the exhaust outlets 31 in the left chamber is 1.5 times that of the hot air discharged from the exhaust outlet 31 in the right chamber. The air return volume of the gas collector 12 is 0.15 times that of the high-temperature pyrolysis chamber 3, and the flow rate of the air inlet pipe 26 in the pyrolysis gasification chamber 2 is 100 m³/h. The nitrogen is separated from the air by the gas separator 13 using a membrane separation technology, and the separated gas has an oxygen content of 90-95% and enters the pyrolysis gasification chamber 2 under the action of the material-propelling blower 14. The gas collector 12 adopts the combination of an upward exhaust method and an activated carbon pressure swing adsorption method. The upward exhaust method is first used to obtain CO₂ gas with a concentration higher than 50%, and then the activated carbon pressure swing adsorption method is used to obtain CO₂ gas with a concentration higher than 80%. The rated steam pressure of the high-pressure steam room 4 is 2.5 MPa, and the steam pressure of the low-pressure steam room 5 is 1.5 MPa.

The operating load of the device in this embodiment is 0.5 t/h, the volume inside the pyrolysis gasification chamber 2 is 4.5 m³, and other components are matched with it. The experimental results show that the thermal energy conversion rate of textile waste is as high as 86-93%, the metal content after purification is 89-92%, and the device reduces the output of exhaust gas by 30-35%, lowers the exhaust gas treatment costs by 80-85%, reduces the cost of CO₂ recovery from exhaust gas by 30-36%, and improves the operating efficiency by 40-45%, so that the conditions for continuous operation are met. The exhaust gas monitoring pollutant emission indicators are shown in Table 2. NOx, HCl, and total VOCs are all below the detection limit, with monitoring indicators showing zero, and other indicators are below the standard limits of China.

**Table 2 List of exhaust emission indicators**

| Pollutant item | Dioxin (ng TEQ/m³) | NOx (mg/m³) | SO₂ (mg/m³) | HCl (mg/m³) | CO (mg/m³) |
|---|---|---|---|---|---|
| Concentration of this item | 0.005±0.002 | 0.000 | 0.526±0.116 | 0.000 | 4.139±0.57 2 |
| Standard limit of China | 0.1 | 250 | 80 | 50 | 80 |
| Pollutant item | Particulate matter (mg/m³) | Mercury and its compounds (mg/m³) | Cadmium, thallium and their compounds (mg/m³) | Total VOCs (mg/m³) | Antimony, arsenic, lead, chromium, cobalt, copper, manganese, nickel and their compounds (mg/m³) |
| Concentration of this item | 2.351±0.426 | (1.89±0.35) ×10⁻⁴ | (8.15±1.69) ×10⁻³ | 0.000 | 0.045±0.009 |
| Standard limit of China | 20 | 0.05 | 0.1 | 60 | 1.0 |

| | | | | | |
|---|---|---|---|---|---|
| Note: The standard limits of China for total VOCs are limited by other industry indicators specified in the *Emission Control Standard for Industrial Enterprises Volatile Organic Compounds* (DB 12/524-2020), and other indicators are based on the limits specified in the *Standard for Pollution Control on the Municipal Solid Waste Incineration* (GB 18485-2014). | | | | | |

**Embodiment 3:** Taking traditional Chinese medicine residue steam utilization and straw biochar preparation as an example.

As shown in FIG. 1, FIG. 2 and FIG. 3, a device includes a feeding system, a solid waste heat treatment system, a steam utilization system, an exhaust gas purification and recovery system, and a biomass carbonization system. The solid waste heat treatment system includes a pyrolysis gasification chamber 2 and a high-temperature pyrolysis chamber 3. The steam utilization system includes a high-pressure steam room 4, a low-pressure steam room 5, and a hot water room 6. The exhaust gas purification and recovery system includes a cyclone dust collector 7, a spray desulfurization and denitration chamber 8, a water bath purification chamber 9, an electrostatic precipitator 10, an exhaust gas monitoring box 11, and a gas collector 12. The biomass carbonization system includes a feeding system 66, a carbonization chamber 65, and a char discharging machine 67. The feeding system includes a feeding chamber 1, a gas separator 13, a material-propelling blower 14, a charging box 15, a conveyor belt, a charging platform 17, a baffle plate 18, and positioning plates 19. The pyrolysis gasification chamber 2 is provided with a unidirectional fire grate 20, a discharge port 21, a front baffle 22, a rear baffle 23, a discharge bin 24, and a gas inlet 25. The pyrolysis gasification chamber 2 is in communication with the high-temperature pyrolysis chamber 3 through a primary vent port 27. The high-temperature pyrolysis chamber 3 is divided into two spaces, i.e., a left chamber and a right chamber. The left chamber is provided with a combustion promoter inlet 30, exhaust outlets 31, and a dust exhaust port 32, and the right chamber is provided with a dust exhaust port 32, an air intake vent 38, and an additive addition port 39. The left chamber is in communication with the right chamber through a secondary vent port 29. The high-temperature pyrolysis chamber 3 is connected to the high-pressure steam room 4 through a first vent duct 40, the low-pressure steam room 5 is connected to the hot water room 6 through a second vent duct 99, the hot water room 6 is connected to the cyclone dust collector 7 through a first smoke exhaust pipe 101, the cyclone dust collector 7 is connected to the spray desulfurization and denitration chamber 8 through a connecting pipe 48, the spray desulfurization and denitration chamber 8 is connected to the water bath purification chamber 9 through a second smoke exhaust pipe 102, the water bath purification chamber 9 is connected to the electrostatic precipitator 10 through a third smoke exhaust pipe 41, and the electrostatic precipitator 10 is connected to the gas collector 12 through an exhaust gas collection pipe 57. The exhaust gas monitoring box 11 is arranged on the exhaust gas collection pipe 57, the gas collector 12 is connected to the high-temperature pyrolysis chamber 3 and a recirculation fan 28 through an exhaust gas return pipe 59, and the recirculation fan 28 is connected to a gas inlet 25 of the pyrolysis gasification chamber 2 through an air inlet pipe 26. The carbonization chamber 65 includes biomass gas discharge outlets 72, hot air inlets 73, a heat collecting plate 74, a collection pit 75, a carbonization plate 76, rollers 84, a push-pull plate 85, a driver 86, and a cooling gas inlet 87. The feeding system 66 includes a charging table 77, a charging tipper 78, a feeding platform 79, a feeding belt 80, a feeding hopper 81, a material-propelling system 82, and spools 83. The hot air in the high-temperature pyrolysis chamber 3 enters the carbonization chamber 65 through hot air pipes 68 and the hot air inlets 73. The combustible gas generated by the carbonization chamber 65 enters the pyrolysis gasification chamber 2 through the biomass gas discharge outlets 72 and biomass gas return pipes 71. The solid waste heat treatment system serves for the treatment of traditional Chinese medicine residue, while the carbonization chamber 65 serves for the treatment of corn straw.

The traditional Chinese medicine residue enters the pyrolysis gasification chamber 2 through the feeding system, and the pyrolysis gas produced enters the high-temperature pyrolysis chamber 3 through the primary vent port 27. After completing the internal circulation within the system through the secondary vent port 29, the gas sequentially enters the high-pressure steam room 4, the low-pressure steam room 5, the hot water room 6, and the cyclone dust collector 7. The hot water room 6 regularly replenishes hot water for the low-pressure steam room 5 through a hot water return pipe 62. Under the action of an induced draft fan 47, the exhaust gas enters the spray desulfurization and denitration chamber 8 through an exhaust pipe 44 of the cyclone dust collector 7 and the connecting pipe 48. After dust reduction is achieved by the spraying of spray nozzles 50, the exhaust gas enters a desulfurization room 54 through a desulfurization inlet 53, and then enters a denitrification room 56 through a denitrification inlet 55. The gas after desulfurization and denitrification passes through the water bath purification chamber 9 and the electrostatic precipitator 10 in sequence, and then enters the gas collector 12 through the exhaust gas collection pipe 57 to collect CO₂. Part of the remaining exhaust gas enters the pyrolysis gasification chamber 2 through the exhaust gas return pipe 59, the rest exhaust gas enters the carbonization chamber 65 through an exhaust gas cooling utilization pipe 63 that has completed the carbonization operation or is discharged outside through an exhaust gas emission outlet 60, and the exhaust gas emission outlet 60 is configured as a tee pipe. After the carbonization of corn straw in the carbonization chamber 65 is completed, the carbonization chamber 65 is opened for connection with an exhaust gas cooling utilization control valve 64 of the exhaust gas cooling utilization pipe 63, and an exhaust gas discharge control valve 61 and gas return valves 58 are closed at the same time. After the temperature inside the carbonization chamber 65 drops below 200 °C, the exhaust gas cooling utilization control valve 64 is closed, and the exhaust gas discharge control valve 61 and the gas return valves 58 are opened at the same time to complete the cooling of the carbonization chamber 65. After the carbonization chamber 65 is cooled, the push-pull plate 85 is opened and the driver 86 is activated. The rollers 84 drive the carbonization plate 76 to transport the carbonized corn straw biochar material into the collection pit 75, and then the char discharging machine 67 is activated to complete residue removal.

The gas separator 13 separates the nitrogen from the air, and the charging box 15 of the feeding system conveys the traditional Chinese medicine residue to the feeding chamber 1 via the first conveyor belt 16, and then transports the traditional Chinese medicine residue to the charging platform 17 via the second conveyor belt 110 inside the feeding chamber 1. The traditional Chinese medicine residue is blown onto the unidirectional fire grate 20 of the pyrolysis gasification chamber 2 through the material-propelling blower 14. The traditional Chinese medicine residue in the pyrolysis gasification chamber 2 is pyrolyzed at 300-500 °C, and the combustible gas produced enters the high-temperature pyrolysis chamber 3 through the primary vent port 27 and is subjected to high-temperature pyrolysis for 5 seconds at 900-1000 °C. During the high-temperature pyrolysis process, a combustion promoter is added to the left chamber through the combustion promoter inlet 30, and a biomass additive is added to the right chamber through additive addition ports 39. The biomass additive is added to the first vent duct 40 between the high-temperature pyrolysis chamber 3 and the high-pressure steam room 4 through the additive addition ports 39.

The bottom of the left chamber of the high-temperature pyrolysis chamber 3 is cleaned of dust every 6 h by a dust removal fan 33, and a dust cover 34 is connected through a spring and is only opened during dust removal to discharge the dust into a dust storage pit 35. The bottom of the right chamber is cleaned of dust every 18 h through the dust exhaust port 32, and the dust is discharged into a dust storage tank 36. The high-pressure steam room 4, the low-pressure steam room 5, and the hot water room 6 are cleaned of dust every 4 days. The cyclone dust collector 7 includes a cyclone dust removal chamber 42 and an ash collection chamber 43, the exhaust pipe 44 in the cyclone dust removal chamber 42 is larger at the upper part and smaller at the lower part, dust falls into the ash collection chamber 43 through a dust settling hole 46, and a dust settling plate 45 is arranged above the dust settling hole 46. An activated carbon material is employed in the desulfurization room 54, and a mixture of activated carbon and iron oxide is employed in the denitrification room 56. Different gas monitoring probes are arranged inside the exhaust gas monitoring box 11, data is collected once every 60 min, and the gas collector 12 is used for collecting CO₂.

Each of the pyrolysis gasification chamber 2 and the high-temperature pyrolysis chamber 3 is provided with a steel plate on the outer side, and is provided with four high-temperature resistant insulation layers, i.e., refractory cotton, refractory bricks, refractory cement and refractory coating in sequence from outside to inside. A combustion promoter added to the combustion promoter inlet 30 is pine wood biochar powder with a calorific value of 5000-7500 kcal/kg, with an additional amount of 0.2-0.45 kg/min. An additive added to the additive addition ports 39 is a mixture of modified biochar, diatomaceous earth, ceramic powder, quartz sand, manganese sand, celadonite powder, caliche, volcanic rock, activated carbon, and river sand, at a mixing ratio of 1:0.04:0.2:0.15:0.04:0.08:0.05:0.1:0.45:0.09. The modified biochar is a mixture of iron oxide modified biochar and potassium permanganate modified biochar, at a mixing ratio of 1:0.4, both having a particle size of 0.5-2 mm. The particle sizes of the diatomaceous earth, ceramic powder, quartz sand, manganese sand, celadonite powder, caliche, volcanic rock, activated carbon, and river sand are 0.1-1.0 mm, 0.01-0.1 mm, 0.25-2.0 mm, 0.25-1.0 mm, 0.1-1.0 mm, 0.25-5.0 mm, 0.5-2.0 mm, 0.1-2.0 mm, and 0.1-1.0 mm, respectively. The activated carbon is coal-based activated carbon.

The spacing between the hot air inlets 73 of the carbonization chamber 65 is 0.5 m, and the hot air inlets are inclined at an angle of 10 degrees in the feeding direction of the carbonization chamber 65. The heat collecting plate 74 is designed as an arched structure, the distance from an outlet to the feed side is 0.2 times the inner space length of the carbonization chamber 65, three biomass gas discharge outlets 72 are available, one of which is located above the outlet of the heat collecting plate 74, and the other two are located at both ends of the top of the carbonization chamber 65. The feeding hopper 81 conveys the treated material to the charging tipper 78 through the feeding platform 79 under the action of a motor through the spools 83 on the top. The charging tipper 78 is in the eccentric rotary type for feeding; after falling onto the charging table 77 below, the material is conveyed to the carbonization plate 76 via the material-propelling system 82, the driver 86 is activated, the upper side of the carbonization plate 76 is covered with corn straw under the drive of the front and rear rollers 84, and the driver 86 is deactivated at the same time. The hot air inlet control valves 88 are opened to allow hot air to enter the carbonization chamber 65. After an interval of 3 min, the biomass gas control valves 89 are opened, and the combustible gas enters the pyrolysis gasification chamber 2 through the biomass gas return pipes 71. After carbonization is completed and the exhaust gas is introduced for cooling, the driver 86 is activated to pull the push-pull plate 85, and thus the carbonized biochar material is discharged into the collection pit 75.

The carbonization chamber 65 is provided with two pressure monitoring gauges 69 and two temperature monitoring gauges 70, the pyrolysis gasification chamber 2 is provided with two temperature monitoring gauges 70, each of the left chamber and right chamber of the high-temperature pyrolysis chamber 3 is provided with two pressure monitoring gauges 69 and two temperature monitoring gauges 70, the high-pressure steam room 4 is provided with two pressure monitoring gauges 69 and two temperature monitoring gauges 70, the hot water room 6 is provided with two temperature monitoring gauges 70, and the third smoke exhaust pipe 41 between the water bath purification chamber 9 and the electrostatic precipitator 10 is provided with one temperature monitoring gauge 70.

The secondary air volume entering the pyrolysis gasification chamber 2 through the air inlet pipe 26 is 0.35 times the air volume of the material-propelling blower 14. The amount of reflux gas in the gas collector 12 and the left and right chambers of the high-temperature pyrolysis chamber 3 is controlled by the gas return valves 58. The hot water in the hot water room 6 is replenished to the high-pressure steam room 4 and the low-pressure steam room 5 through the hot water return pipe 62 to compensate for the hot water loss.

The traditional Chinese medicine residue has a water content of 12-18% and a calorific value of 3200-3500 kcal/kg. The agricultural and forestry biomass waste corn straw is first pressed into particles, with a particle size of 10-30 mm when being prepared into biochar. The water content of the biochar raw material prepared from the agricultural and forestry biomass waste is less than 20%, so that the agricultural and forestry biomass waste is first prepared into particles and then dried.

A flow regulating fan 37 has a flow rate of 150 m³/h, which draws and discharges the hot air from the left chamber of the high-temperature pyrolysis chamber 3 to the right chamber thereof. Tap water is injected into a spray chamber 49, and the wastewater entering a wastewater collection bucket 51 through a waste liquid collection port 52 is evaporated and then reused in the spray chamber 49. An exhaust outlet 31 in the right chamber of the high-temperature pyrolysis chamber 3 is located on the right side, and the exhaust outlets 31 in the left chamber thereof are located in the middle and on the right side. The flow rate of the hot air discharged from the exhaust outlets 31 in the left chamber is 2.2 times that of the hot air discharged from the exhaust outlet 31 in the right chamber. The air return volume of the gas collector 12 is 0.25 times that of the high-temperature pyrolysis chamber 3, and the flow rate of the air inlet pipe 26 in the pyrolysis gasification chamber 2 is 300 m³/h. The nitrogen is separated from the air by the gas separator 13 using a membrane separation technology, and the separated gas has an oxygen content of 92-97% and enters the pyrolysis gasification chamber 2 under the action of the material-propelling blower 14. The gas collector 12 adopts the combination of an upward exhaust method and an activated carbon pressure swing adsorption method. The upward exhaust method is first used to obtain CO₂ gas with a concentration higher than 50%, and then the activated carbon pressure swing adsorption method is used to obtain CO₂ gas with a concentration higher than 80%. The rated steam pressure of the high-pressure steam room 4 is 2.0 MPa, and the steam pressure of the low-pressure steam room 5 is 1.0 MPa.

**The** operating load of the device in this embodiment is 1.0 t/h, the volume inside the pyrolysis gasification chamber 2 is 8.0 m3, and other components are matched with it. The experimental results show that the thermal energy conversion rate of traditional Chinese medicine residue is as high as 85-90%, the carbon yield of biochar is 32-35%, and the device reduces the output of exhaust gas by 32-39%, reduces the cost of CO₂ recovery from exhaust gas by 35-45%, improves the operating efficiency by 40-49%, and lowers the exhaust gas treatment costs by 85-92%, so that continuous operation is realized. The exhaust gas monitoring pollutant emission indicators are shown in Table 3. NOx, SO₂, HCl, and total VOCs are all below the detection limit, with monitoring indicators showing zero, and other indicators are below the standard limits of China.

**Table 3 List of exhaust emission indicators**

| Pollutant item | Dioxin (ng TEQ/m³) | NOx (mg/m³) | SO₂ (mg/m³) | HCl (mg/m³) | CO (mg/m³) |
|---|---|---|---|---|---|
| Concentration of this item | 0.000 | 0.000 | 0.000 | 0.000 | 4.513±0.359 |
| Standard limit of China | 0.1 | 250 | 80 | 50 | 80 |
| Pollutant item | Particulate matter (mg/m³) | Mercury and its compounds (mg/m³) | Cadmium, thallium and their compounds (mg/m³) | Total VOCs (mg/m³) | Antimony, arsenic, lead, chromium, cobalt, copper, manganese, nickel and their compounds (mg/m³) |
| Concentration of this item | 1.615±0.347 | (1.02±0.27) ×10⁻⁴ | (4.21±0.83) × 10⁻³ | 0.000 | 0.029±0.007 |
| Standard limit of China | 20 | 0.05 | 0.1 | 60 | 1.0 |

| | | | | | |
|---|---|---|---|---|---|
| **Note:** The standard limits of China for total VOCs are limited by other industry indicators specified in the *Emission Control Standard for Industrial Enterprises Volatile Organic Compounds* (DB 12/524-2020), and other indicators are based on the limits specified in the *Standard for Pollution Control on the Municipal Solid Waste Incineration* (GB 18485-2014). | | | | | |

**Embodiment 4:** Taking the steam utilization of urban sludge particles and the preparation of tree branch fuel charcoal as an example.

As shown in FIG. 1, FIG. 2 and FIG. 3, a device includes a feeding system, a solid waste heat treatment system, a steam utilization system, an exhaust gas purification and recovery system, and a biomass carbonization system. The solid waste heat treatment system includes a pyrolysis gasification chamber 2 and a high-temperature pyrolysis chamber 3. The steam utilization system includes a high-pressure steam room 4, a low-pressure steam room 5, and a hot water room 6. The exhaust gas purification and recovery system includes a cyclone dust collector 7, a spray desulfurization and denitration chamber 8, a water bath purification chamber 9, an electrostatic precipitator 10, an exhaust gas monitoring box 11, and a gas collector 12. The biomass carbonization system includes a feeding system 66, a carbonization chamber 65, and a char discharging machine 67. The feeding system includes a feeding chamber 1, a gas separator 13, a material-propelling blower 14, a charging box 15, a conveyor belt, a charging platform 17, a baffle plate 18, and positioning plates 19. The pyrolysis gasification chamber 2 is provided with a unidirectional fire grate 20, a discharge port 21, a front baffle 22, a rear baffle 23, a discharge bin 24, and a gas inlet 25. The pyrolysis gasification chamber 2 is in communication with the high-temperature pyrolysis chamber 3 through a primary vent port 27. The high-temperature pyrolysis chamber 3 is divided into two spaces, i.e., a left chamber and a right chamber. The left chamber is provided with a combustion promoter inlet 30, exhaust outlets 31, and a dust exhaust port 32, and the right chamber is provided with a dust exhaust port 32, an air intake vent 38, and an additive addition port 39. The left chamber is in communication with the right chamber through a secondary vent port 29. The high-temperature pyrolysis chamber 3 is connected to the high-pressure steam room 4 through a first vent duct 40, the low-pressure steam room 5 is connected to the hot water room 6 through a second vent duct 99, the hot water room 6 is connected to the cyclone dust collector 7 through a first smoke exhaust pipe 101, the cyclone dust collector 7 is connected to the spray desulfurization and denitration chamber 8 through a connecting pipe 48, the spray desulfurization and denitration chamber 8 is connected to the water bath purification chamber 9 through a second smoke exhaust pipe 102, the water bath purification chamber 9 is connected to the electrostatic precipitator 10 through a third smoke exhaust pipe 41, and the electrostatic precipitator 10 is connected to the gas collector 12 through an exhaust gas collection pipe 57. The exhaust gas monitoring box 11 is arranged on the exhaust gas collection pipe 57, the gas collector 12 is connected to the high-temperature pyrolysis chamber 3 and a recirculation fan 28 through an exhaust gas return pipe 59, and the recirculation fan 28 is connected to a gas inlet 25 of the pyrolysis gasification chamber 2 through an air inlet pipe 26. The carbonization chamber 65 includes biomass gas discharge outlets 72, hot air inlets 73, a heat collecting plate 74, a collection pit 75, a carbonization plate 76, rollers 84, a push-pull plate 85, a driver 86, and a cooling gas inlet 87. The feeding system 66 includes a charging table 77, a charging tipper 78, a feeding platform 79, a feeding belt 80, a feeding hopper 81, a material-propelling system 82, and spools 83. The hot air in the high-temperature pyrolysis chamber 3 enters the carbonization chamber 65 through hot air pipes 68 and the hot air inlets 73. The combustible gas generated by the carbonization chamber 65 enters the pyrolysis gasification chamber 2 through the biomass gas discharge outlets 72 and biomass gas return pipes 71. The solid waste heat treatment system serves for the treatment of urban sludge particles, and the agricultural and forestry biomass waste treated in the carbonization room 65 is pine branches.

The urban sludge particles enter the pyrolysis gasification chamber 2 through the feeding system, and the pyrolysis gas produced enters the high-temperature pyrolysis chamber 3 through the primary vent port 27. After completing the internal circulation within the system through the secondary vent port 29, the gas sequentially enters the high-pressure steam room 4, the low-pressure steam room 5, the hot water room 6, and the cyclone dust collector 7. The hot water room 6 regularly replenishes hot water for the low-pressure steam room 5 through a hot water return pipe 62. Under the action of an induced draft fan 47, the exhaust gas enters the spray desulfurization and denitration chamber 8 through an exhaust pipe 44 of the cyclone dust collector 7 and the connecting pipe 48. After dust reduction is achieved by the spraying of spray nozzles 50, the exhaust gas enters a desulfurization room 54 through a desulfurization inlet 53, and then enters a denitrification room 56 through a denitrification inlet 55. The gas after desulfurization and denitrification passes through the water bath purification chamber 9 and the electrostatic precipitator 10 in sequence, and then enters the gas collector 12 through the exhaust gas collection pipe 57 to collect CO₂. Part of the remaining exhaust gas enters the pyrolysis gasification chamber 2 through the exhaust gas return pipe 59, the rest exhaust gas enters the carbonization chamber 65 through an exhaust gas cooling utilization pipe 63 that has completed the carbonization operation or is discharged outside through an exhaust gas emission outlet 60, and the exhaust gas emission outlet 60 is configured as a tee pipe. After the carbonization of pine branches in the carbonization chamber 65 is completed, the carbonization chamber 65 is opened for connection with an exhaust gas cooling utilization control valve 64 of the exhaust gas cooling utilization pipe 63, and an exhaust gas discharge control valve 61 and gas return valves 58 are closed at the same time. After the temperature inside the carbonization chamber 65 drops below 200 °C, the exhaust gas cooling utilization control valve 64 is closed, and the exhaust gas discharge control valve 61 and the gas return valves 58 are opened at the same time to complete the cooling of the carbonization chamber 65. After the carbonization chamber 65 is cooled, the push-pull plate 85 is opened and the driver 86 is activated. The rollers 84 drive the carbonization plate 76 to transport the carbonized pine branch fuel charcoal material into the collection pit 75, and then the char discharging machine 67 is activated to complete residue removal.

The gas separator 13 separates the nitrogen from the air, and the charging box 15 of the feeding system conveys the urban sludge particles to the feeding chamber 1 via the first conveyor belt 16, and then transports the urban sludge particles to the charging platform 17 via the second conveyor belt 110 inside the feeding chamber 1. The urban sludge particles are blown onto the unidirectional fire grate 20 of the pyrolysis gasification chamber 2 through the material-propelling blower 14. The urban sludge particles in the pyrolysis gasification chamber 2 are pyrolyzed at 300-500 °C, and the combustible gas produced enters the high-temperature pyrolysis chamber 3 through the primary vent port 27 and is subjected to high-temperature pyrolysis for 4 seconds at 850-950 °C. During the high-temperature pyrolysis process, a combustion promoter is added to the left chamber through the combustion promoter inlet 30, and a biomass additive is added to the right chamber through additive addition ports 39. The biomass additive is added to the first vent duct 40 between the high-temperature pyrolysis chamber 3 and the high-pressure steam room 4 through the additive addition ports 39.

The bottom of the left chamber of the high-temperature pyrolysis chamber 3 is cleaned of dust every 3 h by a dust removal fan 33, and a dust cover 34 is connected through a spring and is only opened during dust removal to discharge the dust into a dust storage pit 35. The bottom of the right chamber is cleaned of dust every 15 h through the dust exhaust port 32, and the dust is discharged into a dust storage tank 36. The high-pressure steam room 4, the low-pressure steam room 5, and the hot water room 6 are cleaned of dust every 3 days. The cyclone dust collector 7 includes a cyclone dust removal chamber 42 and an ash collection chamber 43, the exhaust pipe 44 in the cyclone dust removal chamber 42 is larger at the upper part and smaller at the lower part, dust falls into the ash collection chamber 43 through a dust settling hole 46, and a dust settling plate 45 is arranged above the dust settling hole 46. An activated carbon material is employed in the desulfurization room 54, and a mixture of activated carbon and iron oxide is employed in the denitrification room 56. Different gas monitoring probes are arranged inside the exhaust gas monitoring box 11, data is collected once every 120 min, and the gas collector 12 is used for collecting CO₂.

Each of the pyrolysis gasification chamber 2 and the high-temperature pyrolysis chamber 3 is provided with a steel plate on the outer side, and is provided with four high-temperature resistant insulation layers, i.e., refractory cotton, refractory bricks, refractory cement and refractory coating in sequence from outside to inside. A combustion promoter added to the combustion promoter inlet 30 is coke powder with a calorific value of 7000-9000 kcal/kg, with an additional amount of 0.35-0.85 kg/min. An additive added to the additive addition ports 39 is a mixture of modified biochar, diatomaceous earth, ceramic powder, quartz sand, manganese sand, celadonite powder, caliche, volcanic rock, activated carbon, and river sand, at a mixing ratio of 1:0.08:0.35:0.25:0.05:0.09:0.08:0.12:0.55:0.12. The modified biochar is a mixture of iron oxide modified biochar and potassium permanganate modified biochar, at a mixing ratio of 1:0.5, both having a particle size of 0.5-2 mm. The particle sizes of the diatomaceous earth, ceramic powder, quartz sand, manganese sand, celadonite powder, caliche, volcanic rock, activated carbon, and river sand are 0.1-1.0 mm, 0.01-0.1 mm, 0.25-2.0 mm, 0.25-1.0 mm, 0.1-1.0 mm, 0.25-5.0 mm, 0.5-2.0 mm, 0.1-2.0 mm, and 0.1-1.0 mm, respectively. The activated carbon is coal-based activated carbon.

The spacing between the hot air inlets 73 of the carbonization chamber 65 is 1.0 m, and the hot air inlets are inclined at an angle of 5 degrees in the feeding direction of the carbonization chamber 65. The heat collecting plate 74 is designed as an arched structure, the distance from an outlet to the feed side is 0.4 times the inner space length of the carbonization chamber 65, three biomass gas discharge outlets 72 are available, one of which is located above the outlet of the heat collecting plate 74, and the other two are located at both ends of the top of the carbonization chamber 65. The feeding hopper 81 conveys the treated material to the charging tipper 78 through the feeding platform 79 under the action of a motor through the spools 83 on the top. The charging tipper 78 is in the eccentric rotary type for feeding; after falling onto the charging table 77 below, the material is conveyed to the carbonization plate 76 via the material-propelling system 82, the driver 86 is activated, the upper side the carbonization plate 76 is covered with agricultural and forestry biomass waste under the drive of the front and rear rollers 84, and the driver 86 is deactivated at the same time. The hot air inlet control valves 88 are opened to allow hot air to enter the carbonization chamber 65. After an interval of 8 min, the biomass gas control valves 89 are opened, and the combustible gas enters the pyrolysis gasification chamber 2 through the biomass gas return pipes 71. After carbonization is completed and the exhaust gas is introduced for cooling, the driver 86 is activated to pull the push-pull plate 85, and thus the carbonized biochar material is discharged into the collection pit 75.

The carbonization chamber 65 is provided with four pressure monitoring gauges 69 and four temperature monitoring gauges 70, the pyrolysis gasification chamber 2 is provided with four temperature monitoring gauges 70, each of the left chamber and right chamber of the high-temperature pyrolysis chamber 3 is provided with four pressure monitoring gauges 69 and four temperature monitoring gauges 70, the high-pressure steam room 4 is provided with four pressure monitoring gauges 69 and four temperature monitoring gauges 70, the hot water room 6 is provided with four temperature monitoring gauges 70, and the third smoke exhaust pipe 41 between the water bath purification chamber 9 and the electrostatic precipitator 10 is provided with one temperature monitoring gauge 70.

The secondary air volume entering the pyrolysis gasification chamber 2 through the air inlet pipe 26 is 0.25 times the air volume of the material-propelling blower 14. The amount of reflux gas in the gas collector 12 and the left and right chambers of the high-temperature pyrolysis chamber 3 is controlled by the gas return valves 58. The hot water in the hot water room 6 is replenished to the high-pressure steam room 4 and the low-pressure steam room 5 through the hot water return pipe 62 to compensate for the hot water loss.

The urban sludge particles have a water content of 10-15% and a calorific value of 2000-3100 kcal/kg. The agricultural and forestry biomass waste is first pressed into particles, with a particle size being 20-50 mm, and a columnar diameter and a length being 20-80 mm and 100-300 mm, respectively. The water content of the fuel charcoal raw material prepared from the agricultural and forestry biomass waste is less than 20%, so that the agricultural and forestry biomass waste is first prepared into particles and then dried.

A flow regulating fan 37 has a flow rate of 300 m³/h, which draws and discharges the hot air from the left chamber of the high-temperature pyrolysis chamber 3 to the right chamber thereof. Tap water is injected into a spray chamber 49, and the wastewater entering a wastewater collection bucket 51 through a waste liquid collection port 52 is evaporated and then reused in the spray chamber 49. An exhaust outlet 31 in the right chamber of the high-temperature pyrolysis chamber 3 is located on the right side, and the exhaust outlets 31 in the left chamber thereof are located in the middle and on the right side. The flow rate of the hot air discharged from the exhaust outlets 31 in the left chamber is 2.0 times that of the hot air discharged from the exhaust outlet 31 in the right chamber. The air return volume of the gas collector 12 is 0.2 times that of the high-temperature pyrolysis chamber 3, and the flow rate of the air inlet pipe 26 in the pyrolysis gasification chamber 2 is 500 m³/h. The nitrogen is separated from the air by the gas separator 13 using a membrane separation technology, and the separated gas has an oxygen content of 95-99% and enters the pyrolysis gasification chamber 2 under the action of the material-propelling blower 14. The gas collector 12 adopts the combination of an upward exhaust method and an activated carbon pressure swing adsorption method. The upward exhaust method is first used to obtain CO₂ gas with a concentration higher than 50%, and then the activated carbon pressure swing adsorption method is used to obtain CO₂ gas with a concentration higher than 80%; and the rated steam pressure of the high-pressure steam room 4 is 3.0 MPa, and the steam pressure of the low-pressure steam room 5 is 1.99 MPa.

The operating load of the device in this embodiment is 2.0 t/h, the volume inside the pyrolysis gasification chamber 2 is 18 m³, and other components are matched with it. The experimental results show that the thermal energy conversion rate of urban sludge particles is as high as 85-87%, the calorific value of fuel charcoal reaches up to 4500-5300 kcal/kg, and the device reduces the output of exhaust gas by 32-37%, lowers the exhaust gas treatment costs by 81-89%, reduces the cost of CO₂ recovery from exhaust gas by 32-36%, and improves the operating efficiency by 43-50%, so that the conditions for continuous operation are met. The exhaust gas monitoring pollutant emission indicators are shown in Table 4. NOx, HCl, and total VOCs are all below the detection limit, with monitoring indicators showing zero, and other indicators are far below the standard limits of China.

**Table 4 List of exhaust emission indicators**

| Pollutant item | Dioxin (ng TEQ/m³) | NOx (mg/m³) | SO₂ (mg/m³) | HCl (mg/m³) | CO (mg/m³) |
|---|---|---|---|---|---|
| Concentration of this item | 0.000 | 0.000 | 0.263±0.108 | 0.000 | 3.516±0.327 |
| Standard limit of China | 0.1 | 250 | 80 | 50 | 80 |
| Pollutant item | Particulate matter (mg/m³) | Mercury and its compounds (mg/m³) | Cadmium, thallium and their compounds (mg/m³) | Total VOCs (mg/m³) | Antimony, arsenic, lead, chromium, cobalt, copper, manganese, nickel and their compounds (mg/m³) |
| Concentration of this item | 1.463±0.325 | (1.09±0.23) × 10⁻⁴ | (5.13±1.06) × 10⁻³ | 0.000 | 0.029±0.005 |
| Standard limit of China | 20 | 0.05 | 0.1 | 60 | 1.0 |

| | | | | | |
|---|---|---|---|---|---|
| Note: The standard limits of China for total VOCs are limited by other industry indicators specified in the *Emission Control Standard for Industrial Enterprises Volatile Organic Compounds* (DB 12/524-2020), and other indicators are based on the limits specified in the *Standard for Pollution Control on the Municipal Solid Waste Incineration* (GB 18485-2014). | | | | | |

**Embodiment 5:** Taking textile waste steam utilization, sunflower straw biochar preparation and aluminum metal recovery as an example.

As shown in FIG. 1 to FIG. 4, a device includes a feeding system, a solid waste heat treatment system, a steam utilization system, an exhaust gas purification and recovery system, a biomass carbonization system, and a metal pyrolysis recovery system. The solid waste heat treatment system includes a pyrolysis gasification chamber 2 and a high-temperature pyrolysis chamber 3. The steam utilization system includes a high-pressure steam room 4, a low-pressure steam room 5, and a hot water room 6. The exhaust gas purification and recovery system includes a cyclone dust collector 7, a spray desulfurization and denitration chamber 8, a water bath purification chamber 9, an electrostatic precipitator 10, an exhaust gas monitoring box 11, and a gas collector 12. The biomass carbonization system includes a feeding system 66, a carbonization chamber 65, and a char discharging machine 67. The metal pyrolysis recovery system includes a metal recycling pyrolysis chamber 90, a spiral charging hopper 91, a feeding plate 92, a charging chute 97, a charging spiral rod 98, and a residue discharge machine 93. The feeding system includes a feeding chamber 1, a gas separator 13, a material-propelling blower 14, a charging box 15, a conveyor belt, a charging platform 17, a baffle plate 18, and positioning plates 19. The pyrolysis gasification chamber 2 is provided with a unidirectional fire grate 20, a discharge port 21, a front baffle 22, a rear baffle 23, a discharge bin 24, and a gas inlet 25. The pyrolysis gasification chamber 2 is in communication with the high-temperature pyrolysis chamber 3 through a primary vent port 27. The high-temperature pyrolysis chamber 3 is divided into two spaces, i.e., a left chamber and a right chamber. The left chamber is provided with a combustion promoter inlet 30, exhaust outlets 31, and a dust exhaust port 32, and the right chamber is provided with a dust exhaust port 32, an air intake vent 38, and an additive addition port 39. The left chamber is in communication with the right chamber through a secondary vent port 29. The high-temperature pyrolysis chamber 3 is connected to the high-pressure steam room 4 through a first vent duct 40, the low-pressure steam room 5 is connected to the hot water room 6 through a second vent duct 99, the hot water room 6 is connected to the cyclone dust collector 7 through a first smoke exhaust pipe 101, the cyclone dust collector 7 is connected to the spray desulfurization and denitration chamber 8 through a connecting pipe 48, the spray desulfurization and denitration chamber 8 is connected to the water bath purification chamber 9 through a second smoke exhaust pipe 102, the water bath purification chamber 9 is connected to the electrostatic precipitator 10 through a third smoke exhaust pipe 41, and the electrostatic precipitator 10 is connected to the gas collector 12 through an exhaust gas collection pipe 57. The exhaust gas monitoring box 11 is arranged on the exhaust gas collection pipe 57, the gas collector 12 is connected to the high-temperature pyrolysis chamber 3 and a recirculation fan 28 through an exhaust gas return pipe 59, and the recirculation fan 28 is connected to a gas inlet 25 of the pyrolysis gasification chamber 2 through an air inlet pipe 26. The carbonization chamber 65 includes biomass gas discharge outlets 72, hot air inlets 73, a heat collecting plate 74, a collection pit 75, a carbonization plate 76, rollers 84, a push-pull plate 85, a driver 86, and a cooling gas inlet 87. The feeding system 66 includes a charging table 77, a charging tipper 78, a feeding platform 79, a feeding belt 80, a feeding hopper 81, a material-propelling system 82, and spools 83. The metal recycling pyrolysis chamber 90 includes hot air inlets 73, a push-pull plate 85, a driver 86, combustion gas outlets 94, a bidirectional fire grate 95, and a receiving chute 96. The hot air in the high-temperature pyrolysis chamber 3 enters the carbonization chamber 65 and the metal recycling pyrolysis chamber 90 through hot air pipes 68 and the hot air inlet 73. The combustible gas generated by the carbonization chamber 65 enters the pyrolysis gasification chamber 2 through the biomass gas discharge outlets 72 and biomass gas return pipes 71, and the combustible gas produced in the metal recycling pyrolysis chamber 90 enters the pyrolysis gasification chamber 2 through the combustion gas outlets 94 and the biomass gas return pipes 71. The device completes the thermal energy conversion of textile waste through the pyrolysis gasification chamber 2, the high-temperature pyrolysis chamber 3, the high-pressure steam room 4, the low-pressure steam room 5, and the hot water room 6, accomplishes the carbonization process of sunflower straw through the carbonization chamber 65, and separates aluminum metal waste through the metal recycling pyrolysis chamber 90.

The textile waste enters the pyrolysis gasification chamber 2 through the feeding system, and the pyrolysis gas produced enters the high-temperature pyrolysis chamber 3 through the primary vent port 27. After completing the internal circulation within the system through the secondary vent port 29, the gas sequentially enters the high-pressure steam room 4, the low-pressure steam room 5, the hot water room 6, and the cyclone dust collector 7. The hot water room 6 regularly replenishes hot water for the low-pressure steam room 5 through a hot water return pipe 62. Under the action of an induced draft fan 47, the exhaust gas enters the spray desulfurization and denitration chamber 8 through an exhaust pipe 44 of the cyclone dust collector 7 and the connecting pipe 48. After dust reduction is achieved by the spraying of spray nozzles 50, the exhaust gas enters a desulfurization room 54 through a desulfurization inlet 53, and then enters a denitrification room 56 through a denitrification inlet 55. The gas after desulfurization and denitrification passes through the water bath purification chamber 9 and the electrostatic precipitator 10 in sequence, and then enters the gas collector 12 through the exhaust gas collection pipe 57 to collect CO₂. Part of the remaining exhaust gas enters the pyrolysis gasification chamber 2 through the exhaust gas return pipe 59, the rest exhaust gas enters the carbonization chamber 65 through an exhaust gas cooling utilization pipe 63 that has completed the carbonization operation or is discharged outside through an exhaust gas emission outlet 60, and the exhaust gas emission outlet 60 is configured as a tee pipe. After the carbonization of sunflower straw in the carbonization chamber 65 is completed, the carbonization chamber 65 is opened for connection with an exhaust gas cooling utilization control valve 64 of the exhaust gas cooling utilization pipe 63, and an exhaust gas discharge control valve 61 and gas return valves 58 are closed at the same time. After the temperature inside the carbonization chamber 65 drops below 200°C, the exhaust gas cooling utilization control valve 64 is closed, and the exhaust gas discharge control valve 61 and the gas return valves 58 are opened at the same time to complete the cooling of the carbonization chamber 65. After the carbonization chamber 65 is cooled, the push-pull plate 85 is opened and the driver 86 is activated. The rollers 84 drive the carbonization plate 76 to transport the carbonized sunflower straw biochar material into the collection pit 75, and then the char discharging machine 67 is activated to complete residue removal.

The gas separator 13 separates the nitrogen from the air, and the charging box 15 of the feeding system conveys the textile waste to the feeding chamber 1 via the first conveyor belt 16, and then transports the textile waste to the charging platform 17 via the second conveyor belt 110 inside the feeding chamber 1. The textile waste is blown onto the unidirectional fire grate 20 of the pyrolysis gasification chamber 2 through the material-propelling blower 14. The textile waste in the pyrolysis gasification chamber 2 is pyrolyzed at 300-500 °C, and the combustible gas produced enters the high-temperature pyrolysis chamber 3 through the primary vent port 27 and is subjected to high-temperature pyrolysis for 3.5 seconds at 850-950 °C. During the high-temperature pyrolysis process, a combustion promoter is added to the left chamber through the combustion promoter inlet 30, and a biomass additive is added to the right chamber through additive addition ports 39. The biomass additive is added to the first vent duct 40 between the high-temperature pyrolysis chamber 3 and the high-pressure steam room 4 through the additive addition ports 39.

The bottom of the left chamber of the high-temperature pyrolysis chamber 3 is cleaned of dust every 3 h by a dust removal fan 33, and a dust cover 34 is connected through a spring and is only opened during dust removal to discharge the dust into a dust storage pit 35. The bottom of the right chamber is cleaned of dust every 18 h through the dust exhaust port 32, and the dust is discharged into a dust storage tank 36. The high-pressure steam room 4, the low-pressure steam room 5, and the hot water room 6 are cleaned of dust every 3.5 days. The cyclone dust collector 7 includes a cyclone dust removal chamber 42 and an ash collection chamber 43, the exhaust pipe 44 in the cyclone dust removal chamber 42 is larger at the upper part and smaller at the lower part, dust falls into the ash collection chamber 43 through a dust settling hole 46, and a dust settling plate 45 is arranged above the dust settling hole 46. An activated carbon material is employed in the desulfurization room 54, and a mixture of activated carbon and iron oxide is employed in the denitrification room 56. Different gas monitoring probes are arranged inside the exhaust gas monitoring box 11, data is collected once every 100 min, and the gas collector 12 is used for collecting CO₂.

Each of the pyrolysis gasification chamber 2 and the high-temperature pyrolysis chamber 3 is provided with a steel plate on the outer side, and is provided with four high-temperature resistant insulation layers, i.e., refractory cotton, refractory bricks, refractory cement and refractory coating in sequence from outside to inside. A combustion promoter added to the combustion promoter inlet 30 is a gas with an oxygen content exceeding 95%. An additive added to the additive addition ports 39 is a mixture of modified biochar, diatomaceous earth, ceramic powder, quartz sand, manganese sand, celadonite powder, caliche, volcanic rock, activated carbon, and river sand, at a mixing ratio of 1:0.05:0.19:0.16:0.04:0.07:0.06:0.09:0.38:0.09. The modified biochar is a mixture of iron oxide modified biochar and potassium permanganate modified biochar, at a mixing ratio of 1:0.42, both having a particle size of 0.5-2 mm. The particle sizes of the diatomaceous earth, ceramic powder, quartz sand, manganese sand, celadonite powder, caliche, volcanic rock, activated carbon, and river sand are 0.1-1.0 mm, 0.01-0.1 mm, 0.25-2.0 mm, 0.25-1.0 mm, 0.1-1.0 mm, 0.25-5.0 mm, 0.5-2.0 mm, 0.1-2.0 mm, and 0.1-1.0 mm, respectively. The activated carbon is coal-based activated carbon.

The spacing between the hot air inlets 73 of the carbonization chamber 65 is 0.8 m, and the hot air inlets are inclined at an angle of 8 degrees in the feeding direction of the carbonization chamber 65. The heat collecting plate 74 is designed as an arched structure, the distance from an outlet to the feed side is 0.3 times the inner space length of the carbonization chamber 65, three biomass gas discharge outlets 72 are available, one of which is located above the outlet of the heat collecting plate 74, and the other two are located at both ends of the top of the carbonization chamber 65. The feeding hopper 81 conveys the treated material to the charging tipper 78 through the feeding platform 79 under the action of a motor through the spools 83 on the top. The charging tipper 78 is in the eccentric rotary type for feeding. After falling onto the charging table 77 below, the material is conveyed to the carbonization plate 76 via the material-propelling system 82, the driver 86 is activated, the upper side the carbonization plate 76 is covered with agricultural and forestry biomass waste under the drive of the front and rear rollers 84, and the driver 86 is deactivated at the same time. The hot air inlet control valves 88 are opened to allow hot air to enter the carbonization chamber 65. After an interval of 3-8 min, the biomass gas control valves 89 are opened, and the combustible gas enters the pyrolysis gasification chamber 2 through the biomass gas return pipes 71. After carbonization is completed and the exhaust gas is introduced for cooling, the driver 86 is activated to pull the push-pull plate 85, and thus the carbonized biochar material is discharged into the collection pit 75. The spacing between the hot air inlets 73 of the metal recycling pyrolysis chamber 90 is 0.5 m, and the hot air inlets are inclined at an angle of 8 degrees in the feeding direction of the metal recycling pyrolysis chamber 90. Two combustion gas outlets 94 are available and are located at two ends of the top of the metal recycling pyrolysis chamber 90. The metal-containing waste in the charging chute 97 is transported to the spiral charging hopper 91 via the feeding plate 92. Under the action of the charging spiral rod 98, the treated metal-containing waste is conveyed to the bidirectional fire grate 95. The driver 86 is activated, the upper side of the fire grate is covered with the metal-containing waste, and the driver 86 is deactivated at the same time. The hot air inlet control valves 88 are opened to allow hot air to enter the metal recycling pyrolysis chamber 90 for separation of the metal-containing waste, the biomass gas control valves 89 are opened at the same time, and the combustible gas enters the pyrolysis gasification chamber 2 through the biomass gas return pipes 71. After separation is completed, the hot air inlet control valves 88 are closed, the driver 86 is activated to pull the push-pull plate 85, and thus the separated metal-containing waste is discharged into the receiving chute 96. Water is injected into the receiving chute 96 in an amount of 0.85 times the capacity of the receiving chute.

Each of the carbonization chamber 65 and the metal recycling pyrolysis chamber 90 is provided with six pressure monitoring gauges 69 and six temperature monitoring gauges 70, the pyrolysis gasification chamber 2 is provided with six temperature monitoring gauges 70, the left chamber and right chamber of the high-temperature pyrolysis chamber 3 is provided with six pressure monitoring gauges 69 and six temperature monitoring gauges 70, the high-pressure steam room 4 is provided with six pressure monitoring gauges 69 and six temperature monitoring gauges 70, the hot water room 6 is provided with six temperature monitoring gauges 70, and the third smoke exhaust pipe 41 between the water bath purification chamber 9 and the electrostatic precipitator 10 is provided with two temperature monitoring gauges 70.

The secondary air volume entering the pyrolysis gasification chamber 2 through the air inlet pipe 26 is 0.30 times the air volume of the material-propelling blower 14. The amount of reflux gas in the gas collector 12 and the left and right chambers of the high-temperature pyrolysis chamber 3 is controlled by the gas return valves 58. The hot water in the hot water room 6 is replenished to the high-pressure steam room 4 and the low-pressure steam room 5 through the hot water return pipe 62 to compensate for the hot water loss.

The textile waste has a water content of 15-25% and a calorific value of 3300-4100 kcal/kg, and the aluminum metal waste has a water content of less than 10%. The sunflower straw is first pressed into particles, with a particle size of 10-30 mm when being prepared into biochar. The water content of the biochar prepared from the sunflower straw is less than 20%, so that the sunflower straw is first prepared into particles and then dried.

A flow regulating fan 37 has a flow rate of 500 m³/h, which draws and discharges the hot air from the left chamber of the high-temperature pyrolysis chamber 3 to the right chamber thereof. Tap water is injected into a spray chamber 49, and the wastewater entering a wastewater collection bucket 51 through a waste liquid collection port 52 is evaporated and then reused in the spray chamber 49. An exhaust outlet 31 in the right chamber of the high-temperature pyrolysis chamber 3 is located on the right side, and the exhaust outlets 31 in the left chamber thereof are located in the middle and on the right side. The flow rate of the hot air discharged from the exhaust outlets 31 in the left chamber is 1.8 times that of the hot air discharged from the exhaust outlet 31 in the right chamber. The air return volume of the gas collector 12 is 0.24 times that of the high-temperature pyrolysis chamber 3, and the flow rate of the air inlet pipe 26 in the pyrolysis gasification chamber 2 is 800 m³/h. The nitrogen is separated from the air by the gas separator 13 using a membrane separation technology, and the separated gas has an oxygen content of 89-96% and enters the pyrolysis gasification chamber 2 under the action of the material-propelling blower 14. The gas collector 12 adopts the combination of an upward exhaust method and an activated carbon pressure swing adsorption method. The upward exhaust method is first used to obtain CO₂ gas with a concentration higher than 50%, and then the activated carbon pressure swing adsorption method is used to obtain CO₂ gas with a concentration higher than 80%; and the rated steam pressure of the high-pressure steam room 4 is 2.5 MPa, and the steam pressure of the low-pressure steam room 5 is 1.5 MPa.

The operating load of the device in this embodiment is 4.0 t/h, the volume inside the pyrolysis gasification chamber 2 is 35 m³, and other components are matched with it. The experimental results show that the thermal energy conversion rate of textile waste is as high as 85-89%, the carbon yield of sunflower straw biochar exceeds 32-37%, the aluminum content after purification is 80-85%, and the device reduces the output of exhaust gas by 34-39%, lowers the exhaust gas treatment costs by 83-87%, reduces the cost of CO₂ recovery from exhaust gas by 35-42%, and improves the operating efficiency by 45-52%, so that the conditions for continuous operation are met. The exhaust gas monitoring pollutant emission indicators are shown in Table 5. NOx, HCl, and total VOCs are all below the detection limit, with monitoring indicators showing zero, and other indicators are far below the standard limits of China.

**Table 5 List of exhaust emission indicators**

| Pollutant item | Dioxin (ng TEQ/m³) | NOx (mg/m³) | SO₂ (mg/m³) | HCl (mg/m³) | CO (mg/m³) |
|---|---|---|---|---|---|
| Concentration of this item | 0.003±0.001 | 0.000 | 0.419±0.101 | 0.000 | 1.057±0.093 |
| Standard limit of China | 0.1 | 250 | 80 | 50 | 80 |
| Pollutant item | Particulate matter (mg/m³) | Mercury and its compounds (mg/m³) | Cadmium, thallium and their compounds (mg/m³) | Total VOCs (mg/m³) | Antimony, arsenic, lead, chromium, cobalt, copper, manganese, nickel and their compounds (mg/m³) |
| Concentration of this item | 1.033±0.117 | (0.75±0.26) ×10⁻⁴ | (5.33±0.92) ×10⁻³ | 0.000 | 0.036±0.008 |
| Standard limit of China | 20 | 0.05 | 0.1 | 60 | 1.0 |

| | | | | | |
|---|---|---|---|---|---|
| Note: The standard limits of China for total VOCs are limited by other industry indicators specified in the *Emission Control Standard for Industrial Enterprises Volatile Organic Compounds* (DB 12/524-2020), and other indicators are based on the limits specified in the *Standard for Pollution Control on the Municipal Solid Waste Incineration* (GB 18485-2014). | | | | | |

The embodiments of the present invention disclosed above are merely to help illustrate the present invention. The embodiments are not intended to be exhaustive in all its details, nor are they intended to limit the present invention to the specific embodiments described. Many modifications and variations are possible in light of the contents of this Description. These embodiments are selected and described in detail in this Description to better explain the principles and practical applications of the present invention, so that those skilled in the art can well understand and utilize the present invention.

## Claims

1. An integrated device for organic solid waste treatment, metal recovery and carbon material preparation, **characterized by** comprising a feeding system, a solid waste heat treatment system, a steam utilization system, an exhaust gas purification and recovery system, a biomass carbonization system, and a metal pyrolysis recovery system, wherein the solid waste heat treatment system comprises a pyrolysis gasification chamber (2) and a high-temperature pyrolysis chamber (3), and the high-temperature pyrolysis chamber (3) is divided into a left chamber and a right chamber; the steam utilization system comprises a high-pressure steam room (4), a low-pressure steam room (5), and a hot water room (6); the exhaust gas purification and recovery system comprises a cyclone dust collector (7), a spray desulfurization and denitration chamber (8), a water bath purification chamber (9), an electrostatic precipitator (10), and a gas collector (12); the feeding system is connected to a feed inlet of the pyrolysis gasification chamber (2), the pyrolysis gasification chamber (2) is in communication with the left chamber of the high-temperature pyrolysis chamber (3) through a primary vent port (27), the left chamber of the high-temperature pyrolysis chamber (3) is in communication with the right chamber thereof through a secondary vent port (29), the right chamber of the high-temperature pyrolysis chamber (3) is connected to the high-pressure steam room (4) through a first vent duct (40), the high-pressure steam room (4) is connected to the low-pressure steam room (5), the low-pressure steam room (5) is connected to the hot water room (6) through a second vent duct (99), the upper end of the hot water room (6) is connected to the low-pressure steam room (5) through a hot water return pipe (62), a water return valve (100) is arranged on the hot water return pipe (62), the hot water room (6) is connected to the cyclone dust collector (7) through a first smoke exhaust pipe (101), an exhaust pipe (44) of the cyclone dust collector (7) is connected to the spray desulfurization and denitration chamber (8) through a connecting pipe (48), the connecting pipe (48) is provided with an induced draft fan (47), the spray desulfurization and denitration chamber (8) is connected to the water bath purification chamber (9) through a second smoke exhaust pipe (102), the water bath purification chamber (9) is connected to the electrostatic precipitator (10) through a third smoke exhaust pipe (41), the electrostatic precipitator (10) is connected to the gas collector (12) through an exhaust gas collection pipe (57), the gas collector (12) is connected to a discharge pipe (103), an exhaust gas return pipe (59) and an exhaust gas cooling utilization pipe (63) are connected to the discharge pipe (103), the tail end of the discharge pipe (103) is an exhaust gas emission outlet (60), an exhaust gas discharge control valve (61) is arranged on the discharge pipe (103), the exhaust gas return pipe (59) is connected to the left and right chambers of the high-temperature pyrolysis chamber (3) and a recirculation fan (28), the recirculation fan (28) is connected to a gas inlet (25) of the pyrolysis gasification chamber (2) through an air inlet pipe (26), the exhaust gas cooling utilization pipe (63) is connected to the biomass carbonization system, an exhaust gas cooling utilization control valve (64) is arranged on the exhaust gas cooling utilization pipe (63), both the biomass carbonization system and the metal pyrolysis recovery system are provided with hot air inlets (73), two hot air pipes (68) are connected to two sides of the first vent duct (40), the two hot air pipes (68) are respectively connected to the hot air inlets (73) formed in the biomass carbonization system and the metal pyrolysis recovery system, hot air inlet control valves (88) are respectively arranged on the two hot air pipes (68), the biomass carbonization system is internally provided with biomass gas discharge outlets (72), the metal pyrolysis recovery system is internally provided with combustion gas outlets (94), the biomass gas discharge outlets (72) and the combustion gas outlets (94) are respectively connected to the pyrolysis gasification chamber (2) through biomass gas return pipes (71), and the biomass gas return pipes (71) are provided with biomass gas control valves (89).

2. The integrated device for organic solid waste treatment, metal recovery and carbon material preparation according to claim 1, **characterized in that** the biomass carbonization system comprises a carbonization chamber (65), a first feeding system (66) and a char discharging machine (67), a first charging inlet (104) and a plurality of hot air inlets (73) are formed in the side wall of the carbonization chamber (65), the first charging inlet (104) is provided opposite to the plurality of hot air inlets (73), the first charging inlet (104) is connected to the first feeding system (66), a plurality of biomass gas discharge outlets (72) are formed in the top of the carbonization chamber (65), a cooling gas inlet (87) is formed in the bottom of the carbonization chamber (65), the exhaust gas cooling utilization pipe (63) is connected to the cooling gas inlet (87), a carbonization plate (76) is arranged inside the carbonization chamber (65), rollers (84) are arranged at both ends of the carbonization plate (76), the rollers (84) are connected to a driver (86), the front end of the carbonization plate (76) is close to the first charging inlet (104) and the tail end thereof is close to a collection pit (75), a push-pull plate (85) is arranged above the collection pit (75), the collection pit (75) is connected to the char discharging machine (67), a heat collecting plate (74) is arranged above the carbonization plate (76), and an opening is formed in the upper end of the heat collecting plate (74).

3. The integrated device for organic solid waste treatment, metal recovery and carbon material preparation according to claim 2, **characterized in that** the spacing between the plurality of hot air inlets (73) is 0.5-1.0 m, the hot air inlets (73) are inclined at an angle of 5-10 degrees in the direction of the first charging inlet (104), the heat collecting plate (74) has an arched structure, the distance from the opening to the first charging inlet (104) is 0.2-0.4 times the inner space length of the carbonization chamber (65), three biomass gas discharge outlets (72) are available, one of which is located above the opening of the heat collecting plate (74), and the other two are located at both ends of the top of the carbonization chamber (65).

4. The integrated device for organic solid waste treatment, metal recovery and carbon material preparation according to claim 2, **characterized in that** the first feeding system (66) comprises a charging table (77), a charging tipper (78), a feeding platform (79), a feeding belt (80), a feeding hopper (81), a material-propelling system (82), and spools (83), wherein the spools (83) are arranged at two sides of the feeding belt (80), one end of the feeding belt (80) is arranged inside the feeding hopper (81), and the other end thereof is arranged on the feeding platform (79); the charging tipper (78) is arranged at one end of the feeding platform (79), the charging tipper (78) is located above the charging table (77), and the charging tipper (78) is in an eccentric rotary type for feeding; and the material-propelling system (82) is arranged inside the feeding platform (79), an output end of the material-propelling system (82) is arranged on the charging table (77), and the charging table (77) is connected to the first charging inlet (104).

5. The integrated device for organic solid waste treatment, metal recovery and carbon material preparation according to claim 1, **characterized in that** the metal pyrolysis recovery system comprises a metal recycling pyrolysis chamber (90), a residue discharge machine (93) and a second feeding system (105), wherein a second charging inlet (106) and a plurality of hot air inlets (73) are formed in the side wall of the metal recycling pyrolysis chamber (90), the second charging inlet (106) is provided opposite to the plurality of hot air inlets (73), the second charging inlet (106) is connected to the second feeding system (105), a plurality of combustion gas outlets (94) are formed in the top of the metal recycling pyrolysis chamber (90), a bidirectional fire grate (95) is arranged inside the metal recycling pyrolysis chamber (90), the bidirectional fire grate (95) is connected to the driver (86), the front end of the bidirectional fire grate (95) is close to the second charging inlet (106) and the tail end thereof is close to a receiving chute (96), the push-pull plate (85) is arranged above the receiving chute (96), water is injected into the receiving chute (96) in an amount of 0.55-0.85 times the capacity of the receiving chute, and the receiving chute (96) is connected to the residue discharge machine (93).

6. The integrated device for organic solid waste treatment, metal recovery and carbon material preparation according to claim 5, **characterized in that** the spacing between the plurality of hot air inlets (73) is 0.3-0.5 m, the hot air inlets (73) are inclined at an angle of 3-8 degrees in the direction of the second charging inlet (106), two combustion gas outlets (94) are available, and the two combustion gas outlets (94) are located at two ends of the top of the metal recycling pyrolysis chamber (90).

7. The integrated device for organic solid waste treatment, metal recovery and carbon material preparation according to claim 5, **characterized in that** the second feeding system (105) comprises a spiral charging hopper (91), a feeding plate (92), a charging chute (97) and a charging spiral rod (98), wherein one end of the feeding plate (92) is arranged inside the charging chute (97), and the other end thereof is arranged on the spiral charging hopper (91); the charging spiral rod (98) is arranged inside the spiral charging hopper (91); and the charging spiral rod (98) is connected to the second charging inlet (106).

8. The integrated device for organic solid waste treatment, metal recovery and carbon material preparation according to claim 1, **characterized in that** the pyrolysis gasification chamber (2) is internally provided with a unidirectional fire grate (20), the front end of the unidirectional fire grate (20) is close to the feeding system, and the tail end thereof is close to a discharge port (21); a discharge bin (24) is arranged under the discharge port (21), a front baffle (22) and a rear baffle (23) are arranged above the unidirectional fire grate (20), and the front baffle (22) and the rear baffle (23) are both of arc-shaped structures; and the gas inlet (25) is formed between the front baffle (22) and the rear baffle (23).

9. The integrated device for organic solid waste treatment, metal recovery and carbon material preparation according to claim 1, **characterized in that** two exhaust outlets (31) are formed above the left chamber of the high-temperature pyrolysis chamber (3), and the two exhaust outlets (31) of the left chamber are located in the middle and on the right side of the left chamber; an exhaust outlet (31) is formed above the right chamber of the high-temperature pyrolysis chamber (3), and the exhaust outlet (31) of the right chamber is located on the right side of the right chamber; the left chamber and right chamber of the high-temperature pyrolysis chamber (3) exhaust hot air through the exhaust outlets (31); and all the exhaust outlets (31) are connected to the exhaust gas return pipe (59) through exhaust connecting pipes, and both the exhaust connecting pipes and the exhaust gas return pipe (59) are provided with gas return valves (58).

10. The integrated device for organic solid waste treatment, metal recovery and carbon material preparation according to claim 9, **characterized in that** the flow rate of the hot air discharged from the left chamber of the high-temperature pyrolysis chamber (3) is 1.5-2.2 times that of the hot air discharged from the right chamber thereof, and the air volume recirculated by the gas collector (12) through the exhaust gas return pipe (59) is 0.15-0.25 times that of the hot air discharged from the high-temperature pyrolysis chamber (3).

11. The integrated device for organic solid waste treatment, metal recovery and carbon material preparation according to claim 1, **characterized in that** a combustion promoter inlet (30) is formed in the top of the left chamber of the high-temperature pyrolysis chamber (3), and additive addition ports (39) are provided in the first vent duct (40) as well as the top and side walls of the right chamber of the high-temperature pyrolysis chamber (3).

12. The integrated device for organic solid waste treatment, metal recovery and carbon material preparation according to claim 11, **characterized in that** a combustion promoter is added to the combustion promoter inlet (30), and the combustion promoter is a gas with an oxygen content exceeding 95% or a solid fuel with a calorific value of 5000-9000 kcal/kg.

13. The integrated device for organic solid waste treatment, metal recovery and carbon material preparation according to claim 11, **characterized in that** an additive is added to the additive addition ports (39), and the additive is a mixture of modified biochar, diatomaceous earth, ceramic powder, quartz sand, manganese sand, celadonite powder, caliche, volcanic rock, activated carbon, and river sand, at a mixing ratio of 1:(0.03-0.08):(0.15-0.35):(0.10-0.25):(0.03-0.05):(0.06-0.09):(0.03-0.08):(0.05-0.12):(0.35-0.55):(0.08-0.12).

14. The integrated device for organic solid waste treatment, metal recovery and carbon material preparation according to claim 13, **characterized in that** the modified biochar is a mixture of iron oxide modified biochar and potassium permanganate modified biochar, at a mixing ratio of 1:(0.2-0.5), both having a particle size of 0.5-2 mm; the particle sizes of the diatomaceous earth, ceramic powder, quartz sand, manganese sand, celadonite powder, caliche, volcanic rock, activated carbon, and river sand are 0.1-1.0 mm, 0.01-0.1 mm, 0.25-2.0 mm, 0.25-1.0 mm, 0.1-1.0 mm, 0.25-5.0 mm, 0.5-2.0 mm, 0.1-2.0 mm, and 0.1-1.0 mm, respectively; and the activated carbon is coal-based activated carbon.

15. The integrated device for organic solid waste treatment, metal recovery and carbon material preparation according to claim 1, **characterized in that** dust exhaust ports (32) are provided at the bottoms of the left chamber and right chamber of the high-temperature pyrolysis chamber (3), the high-pressure steam room (4), the low-pressure steam room (5), and the hot water room (6); the dust exhaust port (32) at the bottom of the left chamber of the high-temperature pyrolysis chamber (3) is connected to a dust storage pit (35) through a dust pipeline (107), a dust removal fan (33) is arranged on the dust pipeline (107), a dust cover (34) is arranged at the end portion of the dust pipeline (107), and the dust cover (34) is connected through a spring; and a dust storage tank (36) is arranged under the dust exhaust port (32) at the bottom of the right chamber of the high-temperature pyrolysis chamber (3).

16. The integrated device for organic solid waste treatment, metal recovery and carbon material preparation according to claim 1, **characterized in that** an air exhaust vent (108) is provided at the lower part of the left chamber of the high-temperature pyrolysis chamber (3), an air intake vent (38) is provided at the lower part of the right chamber of the high-temperature pyrolysis chamber (3), the air exhaust vent (108) and the air intake vent (38) are connected with each other via a flow regulating duct (109), and a flow regulating fan (37) is arranged on the flow regulating duct (109).

17. The integrated device for organic solid waste treatment, metal recovery and carbon material preparation according to claim 1, **characterized in that** the feeding system comprises a feeding chamber (1), a gas separator (13), a material-propelling blower (14), a charging box (15), a first conveyor belt (16) and a charging platform (17), wherein one end of the first conveyor belt (16) is arranged inside the charging box (15), and the other end thereof is arranged on the feeding chamber (1); a second conveyor belt (110) is arranged inside the feeding chamber (1), and the tail end of the second conveyor belt (110) is close to the charging platform (17); and the gas separator (13) is connected to the material-propelling blower (14), an outlet of the material-propelling blower (14) is provided on the charging platform (17), and the charging platform (17) is connected to the feed inlet of the pyrolysis gasification chamber (2).

18. The integrated device for organic solid waste treatment, metal recovery and carbon material preparation according to claim 17, **characterized in that** the nitrogen is separated from the air by the gas separator (13) using a membrane separation technology, and other gases in the air enter the pyrolysis gasification chamber (2) through the material-propelling blower (14).

19. The integrated device for organic solid waste treatment, metal recovery and carbon material preparation according to claim 18, **characterized in that** the air volume entering the pyrolysis gasification chamber (2) through the air inlet pipe (26) is 0.15-0.35 times the air volume of the material-propelling blower (14).

20. The integrated device for organic solid waste treatment, metal recovery and carbon material preparation according to claim 17, **characterized in that** positioning plates (19) are arranged above both the feed inlet of the pyrolysis gasification chamber (2) and the second conveyor belt (110) in the feeding chamber (1), and a baffle plate (18) is arranged above the feed inlet of the pyrolysis gasification chamber (2).

21. The integrated device for organic solid waste treatment, metal recovery and carbon material preparation according to claim 1, **characterized in that** the cyclone dust collector (7) comprises a cyclone dust removal chamber (42) and an ash collection chamber (43); the exhaust pipe (44) is arranged inside the cyclone dust removal chamber (42), and the exhaust pipe (44) has a structure with a larger upper part and a smaller lower part; and a dust settling hole (46) is formed in the bottom of the cyclone dust removal chamber (42), the dust settling hole (46) is located inside the ash collection chamber (43), and a dust settling plate (45) is arranged above the dust settling hole (46).

22. The integrated device for organic solid waste treatment, metal recovery and carbon material preparation according to claim 1, **characterized in that** the spray desulfurization and denitration chamber (8) comprises a spray chamber (49), a desulfurization room (54) and a denitrification room (56), wherein the spray chamber (49) is connected to the connecting pipe (48), a water tank is arranged inside the spray chamber (49), and a plurality of spray nozzles (50) are connected to the lower part of the water tank; a waste liquid collection port (52) is provided at the bottom of the spray chamber (49), a wastewater collection bucket (51) is arranged under the waste liquid collection port (52), the spray chamber (49) is in communication with the desulfurization room (54) through a desulfurization inlet (53), and the desulfurization room (54) is in communication with the denitrification room (56) through a denitrification inlet (55); and the denitrification room (56) is connected to the water bath purification chamber (9) through a second smoke exhaust pipe (102).

23. The integrated device for organic solid waste treatment, metal recovery and carbon material preparation according to claim 22, **characterized in that** an activated carbon material is employed in the desulfurization room (54), and a mixture of activated carbon and iron oxide is employed in the denitrification room (56).

24. The integrated device for organic solid waste treatment, metal recovery and carbon material preparation according to claim 1, **characterized in that** an exhaust gas monitoring box (11) is arranged on the exhaust gas collection pipe (57), and a plurality of gas monitoring probes are arranged inside the exhaust gas monitoring box (11).

25. The integrated device for organic solid waste treatment, metal recovery and carbon material preparation according to claim 1, **characterized in that** each of the biomass carbonization system, the metal pyrolysis recovery system, the high-pressure steam room (4), and the left chamber and right chamber of the high-temperature pyrolysis chamber (3) is provided with 2-6 pressure monitoring gauges (69) and 2-6 temperature monitoring gauges (70); each of the pyrolysis gasification chamber (2), the low-pressure steam room (5) and the hot water room (6) is provided with 2-6 temperature monitoring gauges (70); and the third smoke exhaust pipe (41) is provided with 1-2 temperature monitoring gauges (70).

26. The integrated device for organic solid waste treatment, metal recovery and carbon material preparation according to claim 1, **characterized in that** the gas collector (12) collects CO2 by combining an upward exhaust method and an activated carbon pressure swing adsorption method, and the remaining exhaust gas enters the discharge pipe (103).

27. The integrated device for organic solid waste treatment, metal recovery and carbon material preparation according to claim 1, **characterized in that** each of the pyrolysis gasification chamber (2) and the high-temperature pyrolysis chamber (3) is provided with a steel plate on the outer side, and is provided with refractory cotton, refractory bricks, refractory cement and refractory coating in sequence from outside to inside.

28. The integrated device for organic solid waste treatment, metal recovery and carbon material preparation according to claim 1, **characterized in that** the rated steam pressure of the high-pressure steam room (4) is 2.0-3.0 MPa, and the steam pressure of the low-pressure steam room (5) is 1.0-2.0 MPa.

29. A use method of the integrated device for organic solid waste treatment, metal recovery and carbon material preparation according to claim 1, **characterized in that**:
organic solid waste enters the pyrolysis gasification chamber (2) through the feeding system; the pyrolysis gas produced enters the left chamber of the high-temperature pyrolysis chamber (3) through the primary vent port (27), then enters the right chamber of the high-temperature pyrolysis chamber (3) through the secondary vent port (29), and enters the high-pressure steam room (4), the low-pressure steam room (5) and the hot water room (6) in turn after completing the circulation in the solid waste heat treatment system; the thermal energy conversion of the organic solid waste is accomplished through the solid waste heat treatment system and the steam utilization system;
the solid waste heat treatment system runs simultaneously with the biomass carbonization system and/or the metal pyrolysis recovery system; the hot air in the high-temperature pyrolysis chamber (3) enters the biomass carbonization system and/or the metal pyrolysis recovery system through the hot air pipes (68); agricultural and forestry biomass waste is placed in the biomass carbonization system and carbonized through the biomass carbonization system to prepare biochar or fuel charcoal; metal waste is put into the metal pyrolysis recovery system and the metal waste is separated by the metal pyrolysis recovery system to achieve metal recovery; the combustible gas generated by the biomass carbonization system enters the pyrolysis gasification chamber (2) through the biomass gas discharge outlets (72) and the biomass gas return pipes (71); the combustible gas generated by the metal pyrolysis recovery system enters the pyrolysis gasification chamber (2) through the combustion gas outlets (94) and the biomass gas return pipes (71);
the exhaust gas discharged from the hot water room (6) enters the cyclone dust collector (7), and then enters the spray desulfurization and denitration chamber (8) under the action of the induced draft fan (47); after dust removal, desulfurization denitration treatment, the exhaust gas enters the water bath purification chamber (9), the electrostatic precipitator (10), and the gas collector (12) in sequence; and CO2 is collected from the gas collector (12), part of the remaining exhaust gas enters the pyrolysis gasification chamber (2) through the exhaust gas return pipe (59), and the rest exhaust gas enters the biomass carbonization system through the exhaust gas cooling utilization pipe (63) that has completed the carbonization operation or is discharged outside through the discharge pipe (103).

30. The use method of the integrated device for organic solid waste treatment, metal recovery and carbon material preparation according to claim 1, **characterized in that** the organic solid waste has a water content of 25% or less and a calorific value higher than 2000 kcal/kg, the metal waste has a water content less than 10%, and the agricultural and forestry biomass waste has a water content less than 20%; the wastes are first prepared into particles and then dried; when the wastes are prepared into biochar, the particle size is 10-30 mm; and when the wastes are prepared into fuel charcoal, the particle size is 20-50 mm, or the columnar diameter and length are 20-80 mm and 100-300 mm, respectively.
